# EUROPÄISCHE PATENTSCHRIFT

(11) **EP 3 030 403 B1**
(45) Veröffentlichungstag und Bekanntmachung des Hinweises auf die Patenterteilung: **22.02.2017**
(21) Anmeldenummer: 15766068.9
(22) Anmeldetag: 26.08.2015
(51) Int. Cl.: B29C 67/00, B33Y 30/00, B22F 3/105

(54) **BESCHICHTERANORDNUNG FÜR EINEN 3D-DRUCKER**
COATING ARRANGEMENT FOR A 3D PRINTER
SYSTÈME DE REVÊTEMENT POUR IMPRIMANTE 3D

(30) Priorität: 29.08.2014 DE 102014112450
(43) Veröffentlichungstag der Anmeldung: 15.06.2016
(73) Patentinhaber: ExOne GmbH, 86368 Gersthofen (DE)
(72) Erfinder: HÖCHSMANN, Rainer, 86863 Langenneufnach (DE); MÜLLER, Alexander, 86420 Diedorf-Vogelsang (DE); KLAUA, Sven, 86161 Augsburg (DE)
(74) Vertreter: Viering, Jentschura & Partner mbB Patent- und Rechtsanwälte
(86) Internationale Anmeldenummer: PCT/EP2015/069544
(87) Internationale Veröffentlichungsnummer: WO 2016/030417

(56) Entgegenhaltungen:
- DE-A1- 4 400 523
- DE-B3-102006 056 422

## Beschreibung

Die vorliegende Erfindung betrifft eine Beschichteranordnung für einen 3D-Drucker sowie einen 3D-Drucker mit solch einer Beschichteranordnung.

Es sind verschiedene generative Fertigungsverfahren (und folglich verschiedene Arten von 3D-Druckern) bekannt.

Einige generative Fertigungsverfahren haben die folgenden Schritte gemeinsam:
(1) Es wird zunächst Partikelmaterial vollflächig auf ein Baufeld aufgebracht, um eine Schicht aus nicht-verfestigtem Partikelmaterial zu bilden.
(2) Die aufgebrachte Schicht aus nicht-verfestigtem Partikelmaterial wird in einem vorbestimmten Teilbereich selektiv verfestigt, zum Beispiel durch selektives Aufdrucken von Behandlungsmittel, zum Beispiel Bindemittel, (alternativ zum Beispiel durch Lasersintern).
(3) Die Schritte (1) und (2) werden wiederholt, um ein gewünschtes Bauteil zu fertigen. Hierzu kann zum Beispiel eine Bauplattform, auf der das Bauteil schichtweise aufgebaut wird, jeweils um eine Schichtdicke abgesenkt werden, bevor eine neue Schicht vollflächig aufgetragen wird (alternativ können zum Beispiel der Beschichter und die Druckvorrichtung jeweils um eine Schichtdicke angehoben werden).
(4) Schließlich kann das gefertigte Bauteil, das von losem, nicht-verfestigtem Partikelmaterial gestützt und umgeben ist, entpackt werden.

Der Bauraum, in dem das oder die Bauteile gefertigt werden, kann zum Beispiel von einer sogenannten Baubox (auch "Jobbox" genannt) definiert sein. Eine solche Baubox kann eine nach oben hin offene, sich in vertikaler Richtung erstreckende Umfangswandstruktur haben (zum Beispiel gebildet von vier vertikalen Seitenwänden), die zum Beispiel in der Draufsicht rechteckig ausgebildet sein kann. In der Baubox kann eine höhenverstellbare Bauplattform aufgenommen sein. Der Raum über der Bauplattform und zwischen der vertikalen Umfangswandstruktur kann dabei den Bauraum zum Beispiel zumindest mitausbilden. Ein oberer Bereich des Bauraums kann zum Beispiel als Baufeld bezeichnet werden. Ein Beispiel für eine solche Baubox ist zum Beispiel in DE 10 2009 056 696 A1 beschrieben.

In dem obigen Schritt (1) kommt in der Regel eine Beschichteranordnung mit einem Beschichter (auch "Recoater" genannt) zum Einsatz. Es sind unterschiedliche Beschichteranordnungen zur Verwendung in einem 3-Drucker bekannt, mit denen ein partikelförmiges Baumaterial in Form einer gleichmäßigen, vollflächigen Schicht auf das Baufeld (auch Baufläche oder Baubereich genannt) aufgebracht werden kann.

Eine Art von Beschichteranordnung verwendet eine Walze (kurz "Walzen-Beschichter"), vor der zunächst eine Menge an partikelförmigem Baumaterial abgelegt wird und die anschließend horizontal über das Baufeld hinweg verfahren wird, um das partikelförmige Baumaterial in Form einer gleichmäßigen Schicht auf das Baufeld aufzubringen. Die Walze kann dabei in Gegenlaufrichtung rotiert werden. Beschichteranordnungen mit großen Längen sind mit einem Walzen-Beschichter schlecht/schwierig darzustellen.

Eine andere Art von Beschichteranordnung (sogenannte Beschichteranordnung mit "Behälter-Beschichter", zum Beispiel "Schlitz-Beschichter") verwendet einen Beschichter mit einem Behälter, der zum Beispiel über ein Baufeld hinweg verfahrbar ist und einen inneren Hohlraum zur Aufnahme von partikelförmigem Baumaterial definiert, der in einer Öffnung zum Ausgeben des partikelförmigen Baumaterials auf das Baufeld mündet. Der Beschichter kann langgestreckt sein, um zum Beispiel die Länge oder Breite eines rechteckigen Baufelds zu überspannen bzw. abzudecken. Die Öffnung kann dann als Längsschlitz ausgebildet sein. Der Beschichter kann also horizontal über das Baufeld hinweg verfahren werden und dabei partikelförmiges Baumaterial aus der Öffnung heraus auf das Baufeld ausgeben, um dadurch eine gleichmäßige, vollflächige Schicht auf das Baufeld aufzubringen.

In dem obigen Schritt (2) kann zum Beispiel eine Druckvorrichtung mit einem Druckkopf zum Einsatz kommen, der auf einen Teilbereich der zuvor aufgebrachten Baumaterial-Schicht gesteuert ein Behandlungsmittel aufbringt. Das Behandlungsmittel trägt zu einer (unmittelbaren und/oder späteren) Verfestigung der Baumaterial-Schicht in dem Teilbereich bei. Zum Beispiel kann das Behandlungsmittel ein Bindemittel sein, zum Beispiel eine Bindemittel-Komponente eines Mehrkomponenten-Bindemittels.

Alternativ kann in dem obigen Schritt (2) zum Beispiel ein Laser eingesetzt werden, um einen Teilbereich der zuvor aufgebrachten Baumaterial-Schicht zu verfestigen, insbesondere durch Sintern oder Schmelzen des Baumaterials in dem Teilbereich.

Die vorliegende Erfindung betrifft eine Beschichteranordnung der zweitgenannten Art, kurz eine Beschichteranordnung mit einem "Behälter-Beschichter", zum Beispiel "Schfitz-Beschichter".

Solche Beschichteranordnungen können zum Beispiel mit einer Vibrationsvorrichtung versehen sein, mit welcher das Partikelmaterial in Vibration versetzbar ist, um das Fließ- bzw. Rieselverhalten des partikelförmigen Baumaterials bzw. den Austrag des partikelförmigen Baumaterials aus der Öffnung zu beeinflussen, insbesondere zu fördern. Eine solche Vibrationsvorrichtung kann zum Beispiel von einer Rüttelvorrichtung gebildet sein, mit der zumindest ein Wandabschnitt des Behälters in Vibration versetzt bzw. mit einer Rüttelbewegung beaufschlagt werden kann, um den Austrag des partikelförmigen Baumaterials zu beeinflussen.

Ferner können solche Beschichteranordnungen zum Beispiel mit einer Labyrinth-Struktur im Innern des Behälters versehen sein, welche ein Ausfließen/Austreten des Baumaterials im Stillstand des Beschichters verhindern kann.

Ferner können solche Beschichteranordnungen zum Beispiel mit einem Streichelement versehen sein, mit welchem auf das Baufeld aufgebrachtes Baumaterial überstrichen werden kann, um das Baumaterial zu verdichten und/oder zu nivellieren.

Ein Beispiel für eine Beschichteranordnung mit einem "Schlitz-Beschichter" ist aus der DE 10 2009 056 689 A1 bekannt. Siehe dort zum Beispiel die Figuren 17-20.

WO 95/18715 A1 offenbart ein Verfahren und eine Vorrichtung zum Herstellen eines dreidimensionalen Objekts, wobei ein zum Aufbringen eines pulverförmigen oder pastenförmigen Materials verwendeter verschiebbarer Behälter an seiner Unterseite mit vibrierenden Abstreifelementen versehen ist, um die Einstellung der Schichtdicke des aufgetragenen Materials zu verbessern. DE 10216013 A1 offenbart ein Verfahren und eine Vorrichtung zum Auftragen von Fluiden, wobei das Fluid vor einer Klinge auf einen zu beschichtenden Bereich aufgetragen wird und die Klinge danach über dem aufgetragenen Fluid verfahren wird und dabei die Klinge eine Schwingung ausführt, um eine bessere Verteilung des aufgetragenen Fluids zu ermöglichen. DE 4400523 A1 offenbart ein Verfahren zum Herstellen eines dreidimensionalen Objekts, bei dem das Objekt schichtweise dadurch erzeugt wird, dass jeweils eine Schicht aus durch Bestrahlen mit elektromagnetischer Strahlung verfestigbarem Material aufgetragen und anschließend an den dem Objekt entsprechenden Stellen durch Bestrahlen verfestigt wird, wobei beim Aufbringen eine gleichmäßige Schichtdicke des aufgebrachten Materials durch Abziehen mittels eines Abstreifelements und gleichzeitiges Vibrieren des Abstreifelements erzeugt wird.

Es kann als eine Aufgabe der vorliegenden Erfindung angesehen werden, eine Beschichteranordnung für einen 3D-Drucker mit einem "Behälter-Beschichter" bereitzustellen, die einen erweiterten Anwendungsbereich hat.

Die vorliegende Erfindung stellt eine Beschichteranordnung für einen 3D-Drucker nach Anspruch 1 bereit. Weitere Ausgestaltungen der Beschichteranordnung sind in den abhängigen Ansprüchen 2-13 beschrieben. Anspruch 14 beschreibt einen 3D-Drucker mit einer entsprechenden Beschichteranordnung.

Gemäß verschiedenen Ausführungsformen kann anschaulich eine Beschichteranordnung bereitgestellt werden, mit der partikelförmige Baumaterialien unterschiedlicher Zusammensetzung zuverlässig in gleichmäßigen Schichten auf ein Baufeld aufbringbar sind. Zum Beispiel kann gemäß verschiedenen Ausführungsformen selbst ein solches partikelförmiges Baumaterial in gleichmäßigen Schichten auf ein Baufeld aufgebracht werden, das ein schlechtes Riesel- bzw. Fließverhalten hat. Zum Beispiel kann gemäß verschiedenen Ausführungsformen ein partikelförmiges Baumaterial, das ein schlechtes Riesel- bzw. Fließverhalten hat, unter Verwendung einer Vibrationsvorrichtung in eine zweckmäßige Vibration versetzt werden, und/oder kann ein Wandabschnitt eines das Baumaterial aufnehmenden Behälters unter Verwendung einer Rüttelvorrichtung mit einer zweckmäßigen Rüttelbewegung beaufschlagt werden, ohne dass hierdurch die Funktion ein oder mehrerer anderer Komponenten der Beschichteranordnung wesentlich beeinträchtigt wird und/oder ohne dass hierdurch die Qualität der aufgebrachten Schicht wesentlich leidet, zum Beispiel durch die Bildung von sog. Wellen in der aufgebrachten Baumaterial-Schicht, die zum Beispiel durch ein schwingendes Streichelement verursacht werden können. Anschaulich können gemäß verschiedenen Ausführungsformen der Behälter und/oder das darin aufgenommene Baumaterial von ein oder mehreren anderen Komponenten der Beschichteranordnung (zum Beispiel Streichelement und/oder Schließelement und/oder Vorlagebehälter) "isoliert" bzw. rüttelbewegungsentkoppelt und/oder vibrationsbewegungsentkoppelt werden, so dass ein Wandabschnitt eines das Baumaterial aufnehmenden Behälters mit einer zweckmäßigen Rüttelbewegung beaufschlagbar ist und/oder das in dem Behälter aufgenommene Baumaterial in eine zweckmäßige Vibration versetzbar ist, im Wesentlichen ohne Rücksicht auf die Funktion ein oder mehrerer anderer Komponenten nehmen zu müssen und/oder im Wesentlichen ohne eine Beeinträchtigung der Qualität der aufgebrachten Schicht.

Unter partikelförmigem Baumaterial kann im Sinne dieser Anmeldung dabei ein Baumaterial verstanden werden, welches zumindest eine Art von Partikelmaterial (zum Beispiel Sand(körner), zum Beispiel Gießereisand, und/oder Metallpartikel und/oder Kunststoffpartikel) aufweist. Es können auch mehrere unterschiedliche Arten von Partikelmaterial in dem Baumaterial enthalten sein, zum Beispiel ein Gemisch aus neuem Sand und recyceltem Sand oder ein Gemisch aus feinem Sand und grobem Sand oder ein Gemisch aus zwei unterschiedlichen Sandtypen. Das Baumaterial kann ferner zumindest eine flüssige Komponente aufweisen, zum Beispiel eine Bindemittel-Komponente, zum Beispiel einen Aktivator, und/oder einen oder mehrere feste und/oder flüssige Zuschlagstoffe. In dem Fall, dass das Baumaterial eine Bindemittel-Komponente enthält, kann zum Beispiel eine weitere Bindemittel-Komponente, zum Beispiel Furanharz, mittels einer Druckvorrichtung selektiv auf eine zuvor aufgebrachte Baumaterial-Schicht aufgedruckt werden, um diese in einem vorbestimmten Bereich zu verfestigen. Je nach herzustellendem Bauteil, zum Beispiel eine Gussform oder ein Gießkern, kann eine speziell dafür zubereitete Baumaterial-Zusammensetzung eingesetzt werden. Die Baumaterial-Zusammensetzung kann dabei definiert werden durch die Anzahl an eingesetzten Komponenten sowie die jeweilige Art und den jeweiligen Anteil der in dem Baumaterial(gemisch) enthaltenen Komponenten. Das Riesel- bzw. Fließverhalten des Baumaterials kann dabei je nach Baumaterial-Zusammensetzung stark variieren. Gemäß verschiedenen Ausführungsformen kann eine Beschichteranordnung für einen 3D-Drucker aufweisen:
einen Beschichter mit einer Trägerstruktur und einem an der Trägerstruktur befestigten Behälter, der einen inneren Hohlraum zur Aufnahme von partikelförmigem Baumaterial definiert, der in einer Öffnung zum Ausgeben des partikelförmigen Baumaterials (zum Beispiel auf/in ein Baufeld bzw. auf/in einen Bauraum) mündet,
eine Vibrationsvorrichtung, die eingerichtet ist, um in dem Behälter aufgenommenes, partikelförmiges Baumaterial in Vibration zu versetzen und dadurch die Ausgabe von Baumaterial aus der Öffnung zu beeinflussen (zum Beispiel zu fördern und/oder zu begünstigen), und
ein an dem Beschichter angebrachtes Streichelement, das eingerichtet ist, um aus der Öffnung ausgegebenes partikelförmiges Baumaterial zu überstreichen, um dadurch das ausgegebene Partikelmaterial zu nivellieren und/oder zu verdichten, und/oder
eine Schließvorrichtung, die eingerichtet ist, um die Öffnung selektiv zu verschließen, und ein an dem Beschichter angebrachtes Schließelement aufweist,
wobei
das Streichelement und/oder das Schließelement von der mittels der Vibrationsvorrichtung in dem Behälter erzeugten Vibration vibrationsentkoppelt an der Trägerstruktur befestigt sind.

Gemäß verschiedenen Ausführungsformen kann eine Beschichteranordnung für einen 3D-Drucker aufweisen:
einen Beschichter mit einer Trägerstruktur und einem an der Trägerstruktur befestigten Behälter, der einen inneren Hohlraum zur Aufnahme von partikelförmigem Baumaterial definiert, der in einer Öffnung zum Ausgeben des partikelförmigen Baumaterials mündet,
eine Rüttelvorrichtung, die eingerichtet ist, um einen Wandabschnitt des Behälters mit einer Rüttelbewegung zu beaufschlagen und dadurch die Ausgabe von Baumaterial aus der Öffnung zu beeinflussen (zum Beispiel zu fördern und/oder zu begünstigen), und
ein an dem Beschichter angebrachtes Streichelement, das eingerichtet ist, um aus der Öffnung ausgegebenes partikelförmiges Baumaterial zu überstreichen, um dadurch das ausgegebene Partikelmaterial zu nivellieren und/oder zu verdichten,
und/oder
eine Schließvorrichtung, die eingerichtet ist, um die Öffnung selektiv zu verschließen, und ein an dem Beschichter angebrachtes Schließelement aufweist,
wobei
das Streichelement und/oder das Schließelement von dem Wandabschnitt des Behälters rüttelbewegungsentkoppelt an der Trägerstruktur befestigt ist.

Die Rüttelvorrichtung kann dabei zum Beispiel die oben genannte Vibrationsvorrichtung ausbilden oder zum Beispiel diese ersetzen.

Alternativ kann die Vibrationsvorrichtung zum Beispiel eingerichtet sein, um in dem Behälter aufgenommenes, partikelförmiges Baumaterial durch ein Anblasen mit einem Fluid (zum Beispiel Druckfluid, zum Beispiel Druckgas, zum Beispiel Druckluft) und/oder mittels Aufbringens von Ultraschallwellen in Vibration zu versetzen. Die Vibrationsvorrichtung kann also zum Beispiel als eine Rüttelvorrichtung ausgebildet sein, zum Beispiel als eine wie unten beschriebene Exzentervorrichtung. Alternativ kann die Vibrationsvorrichtung zum Beispiel eine Ultraschallvorrichtung, mit der das Baumaterial und/oder ein Behälter-Wandabschnitt anregbar und in der Folge in Vibration versetzbar sind, oder eine Blasvorrichtung sein, von der das Baumaterial mit einem Fluid angeblasen und in der Folge in Vibration versetzt wird.

In den genannten Ausführungsformen kann also mindestens eines von dem Streichelement und dem Schließelement vibrationsentkoppelt bzw. rüttelbewegungsentkoppelt an der Trägerstruktur des Beschichters angebracht sein, so dass das Baumaterial und/oder ein Wandabschnitt des Behälters zweckmäßig in Vibration versetzt werden kann bzw. mit einer zweckmäßigen Rüttelbewegung beaufschlagt werden kann, im Wesentlichen ohne Beeinträchtigung der Funktion der Schließvorrichtung und/oder im Wesentlichen ohne eine Beeinträchtigung der Qualität der aufgebrachten Schicht.

Der Beschichter kann zum Beispiel in horizontaler Richtung verfahrbar sein, zum Beispiel über ein Baufeld hinweg. Zum Beispiel kann der Beschichter hierzu entlang einer Linearführungsstruktur verfahrbar sein, zum Beispiel mittels eines Schlittens, an dem der Beschichter befestigt ist.

Der Behälter kann zum Beispiel länglich ausgebildet sein, wobei sich die Längsachse zum Beispiel in der horizontalen Richtung erstreckt, die senkrecht zu der Richtung ist, in der der Beschichter verfahrbar ist. Die Öffnung kann dabei zum Beispiel als Längsschlitz ausgebildet sein, dessen Längsachse sich in der horizontalen Richtung erstreckt, die senkrecht zu der Richtung ist, in der der Beschichter verfahrbar ist.

Der Behälter kann sich im Querschnitt zum Beispiel nach unten hin verjüngen, und kann im Querschnitt zum Beispiel trichterförmig ausgebildet sein.

Nach oben hin kann der Behälter zum Beispiel offen sein.

Die Öffnung bzw. der Längsschlitz kann sich zum Beispiel an einem unteren Endabschnitt des Behälters befinden, d.h. zum Beispiel an dem dem Baufeld zugewandten Endabschnitt des Beschichters, und kann zum Beispiel nach unten zu dem Baufeld hin ausgerichtet sein.

Der (erste) Wandabschnitt des Behälters kann sich in Querrichtung zum Beispiel auf einer ersten Seite befinden und einem zweiten/weiteren Wandabschnitt gegenüberliegen. Der (erste) Wandabschnitt kann zum Beispiel von einer sich in Längsrichtung erstreckenden ersten Behälter-Seitenwand gebildet sein, die in Querrichtung einer zweiten/weiteren Behälter-Seitenwand gegenüberliegt.

Die Trägerstruktur kann sich zum Beispiel in der horizontalen Richtung erstrecken, die senkrecht zu der Richtung ist, in der der Beschichter verfahrbar ist, und/oder parallel ist zu der Längsrichtung des Behälters. Die Trägerstruktur kann zum Beispiel im Wesentlichen starr/steif sein. Die Trägerstruktur kann zum Beispiel einen oder mehrere Träger aufweisen, die sich mit ihrer Längsachse in der horizontalen Richtung erstrecken, die senkrecht zu der Richtung ist, in der der Beschichter verfahrbar ist, und/oder parallel ist zu der Längsrichtung des Behälters. Zum Beispiel kann der Behälter (in Querrichtung) auf einer ersten Seite an einem ersten Träger und an einer gegenüberliegenden zweiten Seite an einem zweiten Träger befestigt sein. Zum Beispiel kann der Behälter (in Querrichtung) auf einer ersten Seite mittels einer Dämpfungsvorrichtung und auf einer zweiten Seite mittels der Rüttelvorrichtung mit der Trägerstruktur verbunden sein, zum Beispiel mit dem ersten Träger bzw. dem zweiten Träger.

Das Baufeld kann zum Beispiel von einer Bauplattform und/oder Baubox (auch "Jobbox" genannt) definiert werden, über bzw. in der ein Bauteil mittels eines 3D-Druckers in einem generativen Herstellungsverfiahren aufgebaut wird/werden kann. Die Baubox kann zum Beispiel eine höhenverstellbare Bauplattform aufnehmen, die während des generativen Herstellungsverfahrens (bzw. während eines sogenannten "Baujobs") schrittweise abgesenkt wird. Der Antrieb für die Höhenverstellung kann zum Beispiel entweder direkt in die Baubox ("mitfahrend") oder zum Beispiel stationär ("anfagenfest") in dem 3D-Drucker vorgesehen sein. Die Baubox kann zum Beispiel aus dem 3D-Drucker heraus und in diesen hinein verfahrbar sein, zum Beispiel über eine Rollenbahn und/oder über einen eigenen, in die Baubox integrierten Fahrantrieb. Die Baubox kann zum Beispiel wie eingangs beschrieben ausgebildet sein, zum Beispiel wie in DE 10 2009 056 696 A1 beschrieben.

Das an dem Beschichter angebrachte Streichelement kann zum Beispiel eine Streichfläche ausbilden und eingerichtet sein, um aus der Öffnung (zum Beispiel auf das Baufeld) ausgegebenes partikelförmiges Baumaterial mit der Streichfläche zu überstreichen, um dadurch das ausgegebene Partikelmaterial zu nivellieren und/oder zu verdichten. Die Streichfläche kann zum Beispiel im Wesentlich plan sein. Die Streichfläche kann zum Beispiel nach unten (zum Beispiel zu dem Baufeld hin) ausgerichtet sein. Zum Beispiel kann das Streichelement eine langgestreckte Form haben, die sich zum Beispiel im Wesentlichen parallel zu der Längsrichtung des Behälters erstrecken kann, zum Beispiel entlang des Schlitzes desselben. Zum Beispiel kann das Streichelement als Streichleiste und/oder als Streichklinge ausgebildet sein. Zum Beispiel kann das Streichelement aus Metall, zum Beispiel Stahl, hergestellt sein.

Das Streichelement kann zum Beispiel unterhalb der Öffnung angeordnet sein, zum Beispiel in vertikaler Richtung unterhalb der Öffnung, zum Beispiel mit (geringem) vertikalem Abstand zu der Öffnung. Mit anderen Worten kann das Streichelement außerhalb bzw. unterhalb des Behälters angeordnet sein.

In horizontaler Richtung kann das Streichelement zum Beispiel seitlich neben der Öffnung angeordnet sein.

Das Streichelement kann zum Beispiel von dem gesamten Behälter rüttelbewegungsentkoppelt an der Trägerstruktur befestigt sein.

Gemäß verschiedenen Ausführungsformen kann die Beschichteranordnung ein erstes und ein zweites Streichelement aufweisen, die jeweils von dem Wandabschnitt des Behälters (zum Beispiel von dem gesamten Behälter) rüttelbewegungsentkoppelt und/oder von der mittels der Vibrationsvorrichtung in dem Behälter erzeigten Vibration vibrationsentkoppelt an der Trägerstruktur befestigt sind. Hierdurch kann der Beschichter als bidirektionaler Beschichter betrieben werden.

Die oben für das eine/erste Streichelement gemachten Angaben gelten analog für das zweite Streichelement.

Das erste und das zweite Streichelement können sich in Querrichtung des Beschichters zum Beispiel gegenüberliegen, und zum Beispiel auf gegenüberliegenden Seiten der Öffnung angeordnet sein. Zum Beispiel können das erste und das zweite Streichelement separat voneinander an der Trägerstruktur befestigt sein. Zum Beispiel können das erste Streichelement an dem ersten Träger und das zweite Streichelement an dem zweiten Träger befestigt sein, zum Beispiel jeweils über ein oder mehrere Rippen der Trägerstruktur sowie eine optionale Leiste.

Das an dem Beschichter angebrachte Schließelement kann zum Beispiel eine längliche Gestalt haben. Die Längsachse des Schließelements kann sich zum Beispiel im Wesentlichen parallel zu der Längsrichtung des Schlitzes erstrecken. Die Länge des Schließelements kann zum Beispiel größer gleich der Länge der Öffnung bzw. des Schlitzes sein.

Das Schließelement kann die Öffnung zum Beispiel in Folge einer seitlichen Bewegung und/oder Verschiebung (zum Beispiel seitliche Expansion) selektiv zumindest teilweise verdecken. Die seitliche Bewegung und/oder Verschiebung kann zum Beispiel zu der Öffnung hin erfolgen.

Das Schließelement kann zum Beispiel im Wesentlichen in horizontaler Richtung, insb. senkrecht zu seiner Längsachse und/oder senkrecht zu einer imaginären vertikalen Linie/Ebene, die sich durch die Öffnung bzw. den Schlitz hindurch erstreckt, bewegbar und/oder verformbar und/oder expandierbar sein, insb. auf die vertikale Linie/Ebene zu.

Gemäß verschiedenen Ausführungsformen kann das (mindestens eine) Schließelement zum Beispiel eine Dichtfläche aufweisen, die eingerichtet ist, um in einem Schließzustand der Schließvorrichtung an einer Gegenfläche abzudichten, wobei die Dichtfläche aus einem nachgiebigen Material gebildet ist. Hierdurch kann ein zuverlässiges Schließen der Öffnung bzw. des Schlitzes gewährleistet werden, insb. wenn/weil sich das nachgiebige Material der Kontur der Gegenfläche (dazwischen eingeschlossene Baumaterial-Partikel inbegriffen) anpassen kann. Das nachgiebige Material kann zum Beispiel ein Elastomer und/oder Silikon sein. Die Gegenfläche kann zum Beispiel gebildet sein von einer ortsfesten Gegertfläche oder einem weiteren Schließelement, das auf der anderen Seite der Öffnung angeordnet ist.

Gemäß verschiedenen Ausführungsformen kann das (mindestens eine) Schließelement zum Beispiel von einem Hohlkörper (zum Beispiel länglicher Hohlkörper) gebildet sein, dessen innerer Hohlraum von einem verformbaren Abschnitt begrenzt ist, der von einem dem Hohlkörper zugeführten Druckfluid unter einer Expansion des inneren Hohlraums nach außen hin (ausgehend von dem inneren Hohlraum) verformbar ist (zum Beispiel im Wesentlichen senkrecht zu der Längsachse des Hohlkörpers und/oder zu der oben beschriebenen imaginären vertikalen Linie/Ebene durch die Öffnung bzw. den Schlitz), um dadurch die Öffnung zumindest teilweise zu verdecken. Der Hohlkörper kann zum Beispiel einen von dem verformbaren Abschnitt gebildeten Expansionsabschnitt aufweisen, an dem der Hohlkörper gezielt verformbar ist. Der verformbare Abschnitt oder Expansionsabschnitt kann sich zum Beispiel entlang der gesamten Längserstreckung des Schlitzes und/oder des länglichen Hohlkörpers erstrecken. Der längliche Hohlkörper oder zumindest der verformbare Abschnitt desselben kann zum Beispiel aus einem Elastomer und/oder Silikonmaterial hergestellt sein.

Auch wenn sich das Schließelement in Form eines (zum Beispiel länglichen) Hohlkörpers in der Praxis bewährt hat (eine Ausführungsform mit zwei Hohlkörpern eingeschlossen), ist das Schließelement nicht auf diese Ausgestaltung eingeschränkt, und alternativ können zum Beispiel ein oder mehrere horizontal bewegbare Schieber als Schließelement(e) zum Einsatz kommen. Jedoch ist das Schließelement in Form eines Hohlkörpers leicht in den Beschichter zu integrieren und kann zudem ein zuverlässiges Schließen des Schlitzes ermöglichen.

Das Schließelement kann zum Beispiel unterhalb der Öffnung angeordnet sein, zum Beispiel in vertikaler Richtung unterhalb der Öffnung, zum Beispiel mit (geringem) vertikalem Abstand zu der Öffnung. Mit anderen Worten kann das Schließelement außerhalb bzw. unterhalb des Behälters angeordnet sein.

In horizontaler Richtung kann das Schließelement zum Beispiel seitlich neben der Öffnung angeordnet sein.

Das Schließelement kann zum Beispiel von dem gesamten Behälter rüttelbewegungsentkoppelt an der Trägerstruktur befestigt sein.

Gemäß verschiedenen Ausführungsformen kann die Schließvorrichtung zum Beispiel einen ersten und einen zweiten (zum Beispiel länglichen) Hohlkörper aufweisen (welche ein erstes und ein zweites Schließelement bilden), wobei jeder der beiden Hohlkörper einen inneren Hohlraum hat, der von einem verformbaren Abschnitt begrenzt ist, wobei die beiden Hohlkörper derart auf einander gegenüberliegenden Seiten der Öffnung (in Beschichter-Querrichtung) angeordnet sind, dass die verformbaren Abschnitte einander zugewandt sind, und wobei die verformbaren Abschnitte eingerichtet sind, um von einem dem zugehörigen Hohlkörper zugeführten Druckfluid unter einer Expansion des inneren Hohlraums nach außen hin verformt zu werden, so dass die beiden verformbaren Abschnitt aufeinander zu bewegbar und miteinander in Kontakt bringbar sind, um hierdurch die Öffnung zu verschließen.

Gemäß verschiedenen Ausführungsformen kann der (jeweilige) verformbare Abschnitt bei freigegebener Beschichter-Öffnung (zum Beispiel im unbelasteten Zustand oder nicht mit Druckfluid beaufschlagten Zustand) zum Beispiel einwärts gewölbt sein (zum Beispiel unter Bildung eines in den Hohlraum hinein vorspringenden Abschnitts) und zum Schließen der Öffnung von einem dem (Jeweiligen) Hohlkörper zugeführten Druckfluid nach außen wölbbar sein.

Gemäß verschiedenen Ausführungsformen kann die Schließvorrichtung zum Beispiel ferner eine Fluidleitungsstruktur aufweisen, über die der (jeweilige) Hohlkörper mit einer Druckfluidquelle in Fluidverbindung bringbar ist oder steht.

Die Druckfluidquelle kann zum Beispiel eingerichtet sein, um dem Hohlkörper durch die Fluidleitungsstruktur selektiv Druckfluid zuzuführen.

Die Fluidleitungsstruktur kann zum Beispiel eine Schlauchleitungsstruktur (zum Beispiel aufweisend ein oder mehrere Schläuche) aufweisen, die an den (jeweiligen) Hohlkörper angeschlossen ist, um diesen mit Druckfluid zu versorgen. Die Schlauchleitungsstruktur kann zum Beispiel als Schleppschlauchleitungsstruktur ausgebildet sein und zum Beispiel in eine Schleppkette integriert sein, welche den Beschichter zum Beispiel zusätzlich mittels eines oder mehrerer Schleppkabel mit elektrischem Strom versorgt (zum Beispiel einen oder mehrere Antriebe des Beschichters).

Die Druckfluidquelle kann zum Beispiel eine Druckluftquelle sein. Zum Beispiel kann die Druckfluidquelle einen Druckbehälter, einen optionalen Druckminderer und eine Armatur (z.B. Ventil) aufweisen. Der Druckbehälter kann zum Beispiel ein stationärer Druckbehälter sein, d.h., ein Druckbehälter, der nicht mit dem Beschichter mitfährt. Die Armatur, welche zum Beispiel an dem Druckbehälter oder zwischen Druckbehälter und Beschichter an der Fluidleitungsstruktur vorgesehen sein kann, kann zum Beispiel von einer Steuereinheit (zum Beispiel von der unten beschriebenen Steuereinheit) über einen mit der Armatur verbundenen Antrieb geschlossen und geöffnet werden, um dadurch den Hohlkörper selektiv mit Druckfluid zu versorgen, um hierdurch die Öffnung zu schließen.

Gemäß verschiedenen Ausführungsformen kann die Schließvorrichtung ferner zum Beispiel eine Steuereinheit (zum Beispiel "Controller" oder elektronische Steuereinheit) aufweisen, die eingerichtet ist, um die Öffnung mittels des mindestens einen Schließelements gesteuert selektiv zu schließen (zum Beispiel durch ein gesteuertes Verformen und/oder Bewegen des Schließelements).

Zum Beispiel kann die Steuereinheit mit der oben erwähnten Druckfluidquelle in Verbindung stehen (zum Beispiel mit deren Armatur) und eingerichtet sein, um diese für ein Schließen der Öffnung derart anzusteuern, dass die Druckfluidquelle Druckfluid in den Hohlkörper einspeist, so dieser an seinem verformbaren Abschnitt verformt wird.

Das Streichelement und das Schließelement können zum Beispiel fest miteinander verbunden sein und/oder gemeinsam an der Trägerstruktur befestigt sein, zum Beispiel gemeinsam an dieser aufgehängt sein. Zum Beispiel kann das Streichelement unterhalb des Schließelements angeordnet sein. D.h., zum Beispiel kann das mindestens eine Schließelement in vertikaler Richtung zwischen der Öffnung und dem mindestens einen Streichelement angeordnet sein. Zum Beispiel kann das Schließelement auf einer Oberseite (dem Baufeld abgewandte Seite) des Streichelements angebracht sein, zum Beispiel sich daran abstützen.

Gemäß verschiedenen Ausführungsformen kann die Beschichteranordnung ein erstes und ein zweites Schließelement aufweisen, die jeweils von dem Wandabschnitt des Behälters (zum Beispiel von dem gesamten Behälter) rüttelbewegungsentkoppelt und/oder von der mittels der Vibrationsvorrichtung in dem Behälter erzeugten Vibration vibrationsentkoppelt an der Trägerstruktur befestigt sind.

Die oben für das eine/erste Schließelement gemachten Angaben gelten analog für das zweite Streichelement.

Das erste und das zweite Schließelement können sich in Querrichtung des Beschichters zum Beispiel gegenüberliegen, und zum Beispiel auf gegenüberliegenden Seiten der Öffnung angeordnet sein. Zum Beispiel können das erste und das zweite Schließelement separat voneinander an der Trägerstruktur befestigt sein. Zum Beispiel können das erste Schließelement an dem ersten Träger und das zweite Schließelement an dem zweiten Träger befestigt sein, zum Beispiel jeweils über ein oder mehrere Rippen der Trägerstruktur sowie eine optionale Leiste.

Gemäß verschiedenen Ausführungsformen kann/können bei der Beschichteranordnung zum Beispiel:
das (jeweilige) Streichelement und/oder das (jeweilige) Schließelement im Wesentlichen starr an der Trägerstruktur befestigt sein und/oder
das (jeweilige) Streichelement und/oder das (jeweilige) Schließelement von dem Wandabschnitt des Behälters getrennt an der Trägerstruktur befestigt sein (zum Beispiel unter Umgehung des Wandabschnitts und/oder an verschiedenen Stellen der Trägerstruktur) und/oder
das (jeweilige) Streichelement und/oder das (jeweilige) Schließelement von dem Behälter getrennt an der Trägerstruktur befestigt sein (zum Beispiel unter Umgehung des Behälters und/oder an verschiedenen Stellen der Trägerstruktur) und/oder
das (jeweilige) Streichelement und/oder das (jeweilige) Schließelement mit vertikalem Abstand zu der Öffnung unterhalb derselben angeordnet sein und/oder
das (jeweilige) Streichelement und das (jeweilige) Schließelement gemeinsam an der Trägerstruktur befestigt sein, d.h. das (jeweilige) Streichelement und das (jeweilige) Schließelement können zu einem Paar gruppiert gemeinsam an der Trägerstruktur befestigt sein.

Gemäß verschiedenen Ausführungsformen kann der (erste) Wandabschnitt des Behälters zum Beispiel über die Rüttelvorrichtung an der Trägerstruktur befestigt sein, zum Beispiel an einem der Träger (zum Beispiel dem zweiten Träger).

Gemäß verschiedenen Ausführungsformen kann die Rüttelvorrichtung zum Beispiel von einer Exzentervorrichtung gebildet sein. Alternativ kann die Rüttelvorrichtung zum Beispiel von einem linear angetriebenen Element ausgebildet sein bzw. ein solches aufweisen, das eine Rüttelbewegung/Hin-und-Her-Bewegung erzeugt, die auf den Wandabschnitt des Behälters wirkt.

Die Exzentervorrichtung kann zum Beispiel aufweisen:
eine Welle, welche drehbar an der Trägerstruktur befestigt ist,
einen an der Welle angebrachten Exzenter und
einen Pleuel, der mit dem Wandabschnitt des Behälters verbunden ist.

Die Welle kann sich zum Beispiel mit ihrer Längsachse im Wesentlichen parallel zu der Beschichter-Längsachse erstrecken, und kann zum Beispiel in Längsrichtung an mehreren Stellen drehbar an der Trägerstruktur befestigt sein.

Zum Beispiel kann die Exzentervorrichtung mehrere an der Welle angebrachte Exzenter aufweisen, die über einen jeweiligen Pleuel an verschiedenen Stellen mit dem (ersten) Wandabschnitt des Behälters verbunden sind (zum Beispiel in Beschichter-Längsrichtung hintereinander).

Gemäß verschiedenen Ausführungsformen kann zum Beispiel ein weiterer/zweiter Wandabschnitt des Behälters mittels einer Dämpfungsvorrichtung an der Trägerstruktur befestigt sein, zum Beispiel an dem anderen der Träger (zum Beispiel dem ersten Träger).

Der weitere/zweite Wandabschnitt des Behälters kann zum Beispiel in Querrichtung des Beschichters dem einen/ersten Wandabschnitt gegenüberliegen, zum Beispiel auf einer gegenüberliegenden Seite der Öffnung.

Zum Beispiel kann der weitere/zweite Wandabschnitt des Behälters in Längsrichtung des Beschichters über mehrere Dämpfungsvorrichtungen an der Trägerstruktur befestigt sein.

Gemäß verschiedenen Ausführungsformen kann die (jeweilige) Dämpfungsvorrichtung zum Beispiel ein zwischen Trägerstruktur und dem weiteren Wandabschnitt angeordnetes Dämpfungs-Teil aufweisen, zum Beispiel Elastik-Dämpfungs-Teil.

Zum Beispiel kann das Dämpfungs-Teil an der Trägerstruktur befestigt sein, wobei sich der weitere Wandabschnitt mit einer Flanschstruktur (zum Beispiel einem Vorsprungsabschnitt) an dem Dämpfungs-Teil abstützt.

Das Dämpfungs-Teil, zum Beispiel Elastik-Dämpfungs-Teil, kann zum Beispiel aus einem geeigneten Dämpfungs-Polymer hergestellt sein. Zum Beispiel kann das Dämpfungs-Teil eine Zylinder-Form und/oder Prisma-Form aufweisen, zum Beispiel Vollzylinder-Form und/oder Vollprisma-Form.

Gemäß verschiedenen Ausführungsformen kann die Beschichteranordnung zum Beispiel ferner aufweisen:
einen Vorlagebehälter, der oberhalb von dem Behälter angeordnet ist, um diesen mit Baumaterial zu versorgen, und der von der mittels der Vibrationsvorrichtung in dem Behälter erzeugten Vibration vibrationsentkoppelt und/oder von dem Wandabschnitt des Behälters (zum Beispiel von dem gesamten Behälter) rüttelbewegungsentkoppelt ist.

Der Vorlagebehälter kann zum Beispiel von der Trägerstruktur gebildet und/oder an dieser befestigt sein, z.B. im Wesentlichen starr. In dem Vorlagebehälter kann zum Beispiel eine Verteilervorrichtung, zum Beispiel Verteilerschnecke, aufgenommen sein.

Gemäß verschiedenen Ausführungsformen kann die Beschichteranordnung zum Beispiel ferner eine Steuereinheit (zum Beispiel "Controller" oder elektronische Steuereinheit) aufweisen, die eingerichtet ist, um die Vibrationsvorrichtung und/oder die Rüttelvorrichtung anzusteuern, so dass diese das Baumaterial selektiv in Vibration versetzt bzw. einen Wandabschnitt des Behälters selektiv mit einer Rüttelbewegung beaufschlagt. Die Steuereinheit kann zum Beispiel dieselbe oder eine andere Steuereinheit sein wie die der Schließvorrichtung.

Zum Beispiel kann die Steuereinheit einen Drehantrieb, der die oben beschriebene Welle drehbewegt, ansteuern, um die Rüttelbewegung zu erzeugen.

Zum Beispiel kann die Steuereinheit eingerichtet sein, um die Rüttelvorrichtung und/oder die Vibrationsvorrichtung anzusteuern, so dass diese während einer Beschichtungsfahrt des Beschichters selektiv die Rüttelbewegung bzw. die Vibration erzeugt.

Zum Beispiel kann die Steuereinheit eingerichtet sein, um die Rüttelvorrichtung und/oder die Vibrationsvorrichtung in Abhängigkeit von einer verwendeten Baumaterial-Zusammensetzung anzusteuern, zum Beispiel gemäß einem für die Baumaterial-Zusammensetzung in der Steuereinheit hinterlegten Parameter oder Parametersatz. Zum Beispiel können in der Steuereinheit für unterschiedliche Baumaterial-Zusammensetzungen unterschiedliche Parameter oder Parametersätze hinterlegt sein.

Gemäß verschiedenen Ausführungsformen kann ein 3D-Drucker (oder "3D-Druckanlage") zum Beispiel eine Beschichteranordnung aufweisen, die wie oben beschrieben ausgestaltet ist.

Zum Beispiel können mehrere 3D-Drucker eine 3D-Druckeranordnung bilden.

Zum Beispiel kann der (jeweilige) 3D-Drucker ferner aufweisen:
eine Druckvorrichtung zum selektiven, gesteuerten Ausgeben von Behandlungsmittel, die eingerichtet ist, um einen vorbestimmten Teilbereich einer zuvor aufgebrachten Schicht aus Baumaterial mit Behandlungsmittel zu bedrucken (das mittels des Druckvorrichtung ausgegebene Behandlungsmittel trägt zu einer selektiven Verfestigung bei und kann zum Beispiel eine Bindemittelkomponente eines Mehrkomponentenbindemittels sein, wobei eine weitere Bindemittelkomponente in dem Baumaterial enthalten oder diesem zugegeben wird); und/oder
eine in den 3D-Drucker integrierte Beschickungseinheit, mit der Baumaterial frisch zubereitbar und in den Beschichter zuführbar ist, und/oder
ein oder mehrere Bauplattformen und/oder Bauboxen, die ein jeweiliges Baufeld definieren.

Die Druckvorrichtung kann zum Beispiel horizontal verfahrbar sein, zum Beispiel in einer Richtung senkrecht zu der Richtung, in der der mindestens eine Beschichter verfahrbar ist. Die Druckvorrichtung kann zum Beispiel eingerichtet sein, um mehrere Baufelder zu bedienten. Die Druckvorrichtung kann zum Beispiel zusätzlich in der Richtung verfahrbar sein, in der auch der mindestens eine Beschichter verfahrbar ist, so dass sie das oder die Baufelder mäanderförmig abfahren kann, zum Beispiel in einer U-Form.

Alternativ kann eine jeweilige Baumaterialschicht zum Beispiel mit einem Laser selektiv verfestigt, zum Beispiel gesintert, werden (sogenanntes "selektives Lasersintern").

Die Beschickungseinheit kann zum Beispiel einen Mischbehälter mit Rührwerk sowie ein oder mehrere Vorratsbehälter aufweisen, von denen aus ein jeweiliges Partikelmaterial in den Mischbehälter einspeisbar ist. Der Mischbehälter mit Rührwerk sowie die ein oder mehreren Vorratsbehälter können in vertikaler Richtung zum Beispiel über dem mindestens einen Baufeld angeordnet sein. Ferner kann der Mischbehälter zum Beispiel über eine Dosierpumpe mit einem Flüssigkeitsbehälter in Verbindung stehen, aus dem eine flüssige Komponente in den Mischbehälter einspeisbar ist. Der Mischbehälter kann zum Beispiel einen Ausgabeschacht haben, über den der Beschichter mit frisch zubereitetem Baumaterial befüllt werden kann, wenn er in eine Befüllungsposition verfahren ist.

Beispielgebende, aber nicht einschränkende Ausführungsformen der Erfindung sind in den Figuren dargestellt und werden im Folgenden näher erläutert.

Es zeigen:
Figur 1 eine Seitenansicht einer Beschichteranordnung gemäß einer Ausführungsform der Erfindung.
Figur 2 eine Perspektivansicht auf eine Stirnseite der Beschichteranordnung aus Figur 1.
Figur 3 eine weitere Perspektivansicht auf die Stirnseite aus Figur 2.
Figur 4 eine geschnittene Perspektivansicht der Beschichteranordnung aus Figur 1.
Figur 5 eine geschnittene Perspektivansicht der Beschichteranordnung aus Figur 1.
Figur 6 eine Querschnittansicht durch die Beschichteranordnung aus Figur 1 an einer ersten Längsposition.
Figur 7 eine Querschnittansicht durch die Beschichteranordnung aus Figur 1 an einer zweiten Längsposition.
Figur 8a eine weitere Querschnittansicht durch die Beschichteranordnung, wobei die Schließvorrichtung geöffnet ist.
Figur 8b eine weitere Querschnittansicht durch die Beschichteranordnung, wobei die Schließvorrichtung geschlossen ist.
Figur 9 eine Querschnittansicht durch ein Schließelement zur Verwendung in einer erfindungsgemäßen Beschichteranordnung, in einem geöffneten Zustand des Schließelements.
Figur 10 einen vergrößerten Abschnitt der Seitenansicht aus Figur 1.
Figur 11 einen 3D-Drucker gemäß einer Ausführungsform der Erfindung, wobei das Anlagengehäuse und die Beschickungseinheit weggelassen sind.
Figur 12 den 3D-Drucker aus Figur 11, diesmal mit einem Großteil des Anlagengehäuses und mit integrierter Beschickungseinheit.

Die Figuren 13 und 14 in einer Draufsicht bzw. Perspektivansicht von oben eine 3D-Druckeranordnung, mit einem ersten und einem zweiten 3D-Drucker.

In der folgenden ausführlichen Beschreibung wird auf die beigefügten Figuren Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung können Begriffe wie "verbunden", "angeschlossen" sowie "gekoppelt" verwendet werden zum Beschreiben sowohl einer direkten als auch einer indirekten Verbindung, eines direkten oder indirekten Anschlusses sowie einer direkten oder indirekten Kopplung.

In den Figuren werden identische oder ähnliche Elemente mit identischen Bezugszeichen versehen, soweit dies zweckmäßig ist.

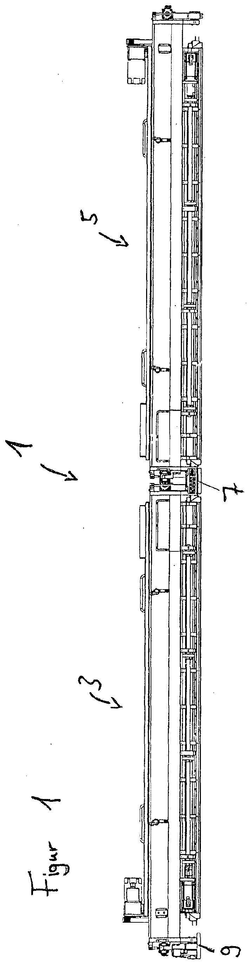

Figur 1 zeigt eine Seitenansicht einer Beschichteranordnung 1 gemäß einer ersten Ausführungsform der Erfindung.

Die Beschichteranordnung ist hier beispielgebend mit zwei Beschichtern 3, 5 ausgestaltet. Es versteht sich, dass die Beschichteranordnung 1 alternativ nur mit einem Beschichter 3 oder mit weiteren Beschichtern ausgestattet sein kann, wobei die unten beschriebenen Merkmale analog anwendbar sind, d.h. nicht auf eine Beschichteranordnung mit zwei Beschichtern beschränkt sind.

Die hier gezeigte Beschichteranordnung 1 weist einen ersten Beschichter 3 und einen zweiten Beschichter 5 auf. Im Folgenden wird hauptsächlich der erste Beschichter 3 beschrieben, und die in diesem Zusammenhang genannten Merkmale sind analog anwendbar auf den zweiten Beschichter 5.

Der erste Beschichter 3 und der zweite Beschichter 5 können zum Beispiel über eine Basisplatte 7 fest miteinander verbunden sein, so dass sie gemeinsam über ein jeweiliges Baufeld hinweg verfahrbar sind. Im vorliegenden Fall ist jeder Beschichter an einer seiner Stirnseiten an der Basisplatte 7 befestigt, zum Beispiel abgestützt. Die Basisplatte 7 kann wiederum entlang einer (nicht gezeigten) Linearführungsstruktur verfahrbar sein, die sich in Figur 1 senkrecht zu der Zeichenebene erstrecken würde.

Ferner kann der erste Beschichter 3 mit seiner anderen Stirnseite zum Beispiel an einer weiteren Basisplatte 9 befestigt sein. Die Basisplatte 9 kann wiederum entlang einer weiteren (ebenfalls nicht gezeigten) Linearführungsstruktur verfahrbar sein. Auch der zweite Beschichter 5 kann an seiner anderen Stirnseite an einer weiteren (nicht gezeigten) Basisplatte befestigt sein.

Wie in Figur 1 gezeigt, können die beiden Beschichter 3 und 5 zum Beispiel jeweils langgestreckt ausgebildet sein, wobei sich die jeweilige Längsachse senkrecht zur Bewegungsrichtung erstreckt. Ferner können die beiden Beschichter 3 und 5 in Längsrichtung hintereinander angeordnet sein.

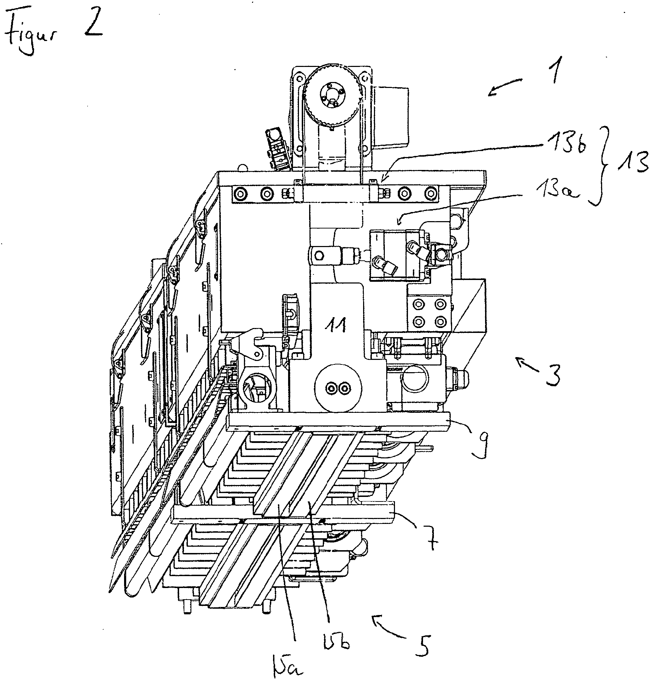

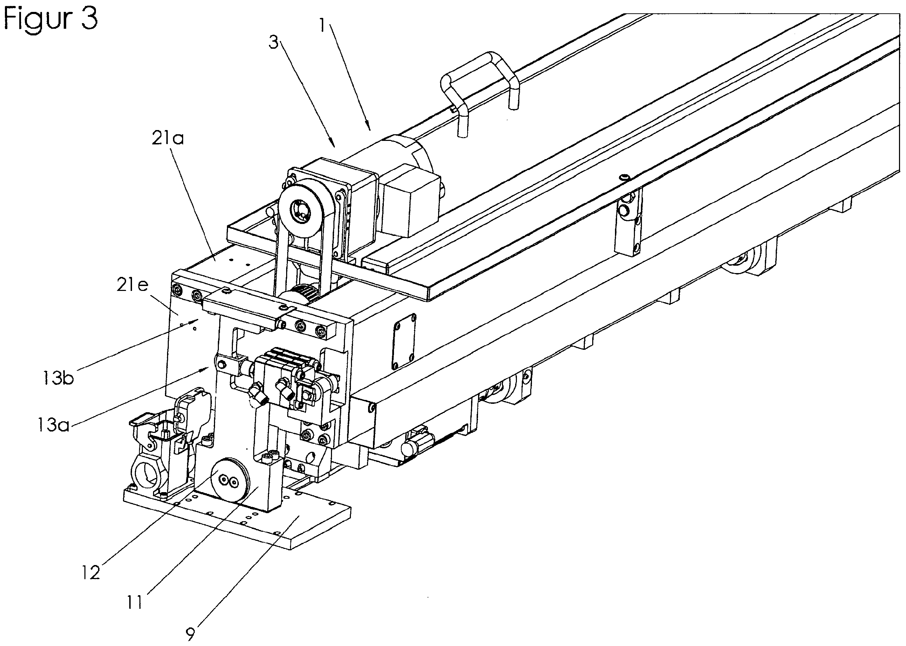

Die **Figuren 2** **und** **3** zeigen jeweils eine Perspektivansicht auf eine Stirnseite der Beschichteranordnung aus Figur 1.

Wie in den Figuren 2 und 3 gezeigt, kann der erste Beschichter 3 zum Beispiel an seiner freien, dem zweiten Beschichter 5 abgewandten Stirnseite über einen Lagerbock 11 an der Basisplatte 9 befestigt sein. Analog kann der Beschichter 3 zum Beispiel über einen weiteren Lagerbock an der Basisplatte 7 befestigt sein.

Der Beschichter 3 kann zum Beispiel schwenkbar an dem jeweiligen Lagerbock gelagert sein. Dies ermöglicht ein Schwenken des Beschichters 3 um eine horizontale Schwenkachse, die parallel verläuft zu der Längsachse des Beschichters 3, um mittels einer Schwenkvorrichtung 13 einen Neigungswinkel von ein oder mehreren, an dem Beschichter 3 angebrachten Streichelementen 15a und 15b einzustellen. Die Schwenkvorrichtung ist hier beispielgebend mit einem Hydraulikantrieb 13a, der zwischen Lagerbock und Beschichter angeordnet ist, und einem elektronisch verstellbaren Anschlagsystem 13b ausgeführt, das den Schwenkwinkel des Beschichters nach rechts und links variabel begrenzt. Der Beschichter 3 kann dabei zum Beispiel für eine erste Fahrt ("Hinfahrt") in eine erste Richtung und für eine zweite Fahrt ("Rückfahrt") in eine zweite Richtung geschwenkt werden.

Die Streichelemente 15a und 15b sind hier beispielgebend als Streichleisten ausgebildet und können zum Beispiel aus Stahl gefertigt sein. Die Streichelemente 15a und 15b können auch als Klingen bezeichnet werden.

Wie in Figur 2 gezeigt, bilden die Streichelemente 15a und 15b zum Beispiel eine nach unten gerichtete Streichfläche aus, die im Wesentlichen eben ausgebildet ist. Durch Einstellen des Neigungswinkels der jeweiligen Streichfläche der Streichelemente 15a und 15b kann ein gewünschter Verdichtungsgrad des Partikelmaterials eingestellt werden. Der vorliegende Beschichter 3 ist dabei beispielgebend als bidirektionaler Beschichter ausgebildet, der in beiden Richtungen, während einer Hin- und während einer Rückfahrt, beschichten und das ausgegebene Partikelmaterial zweckmäßig verdichten kann.

Es versteht sich, dass die beschriebene Beschichteranordnung auch als unidirektionale Beschichteranordnung ausgestaltet sein kann, in welchem Fall eine der Klingen eingespart werden kann. Zudem kann die Beschichteranordnung auch ohne schwenkbaren Beschichter und/oder ohne verstellbaren Klingenwinkel ausgeführt werden.

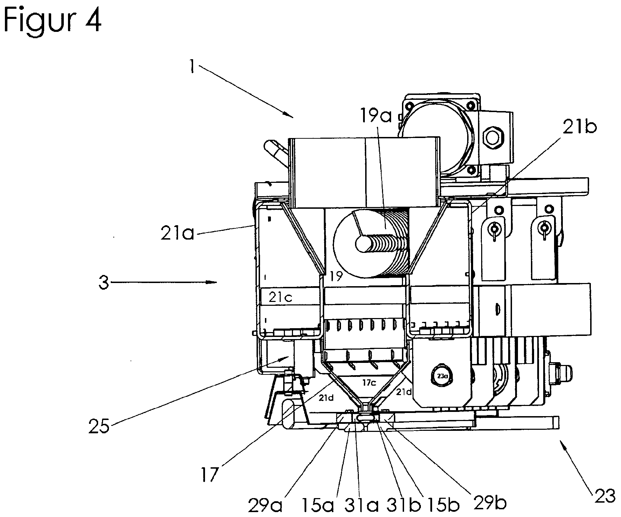

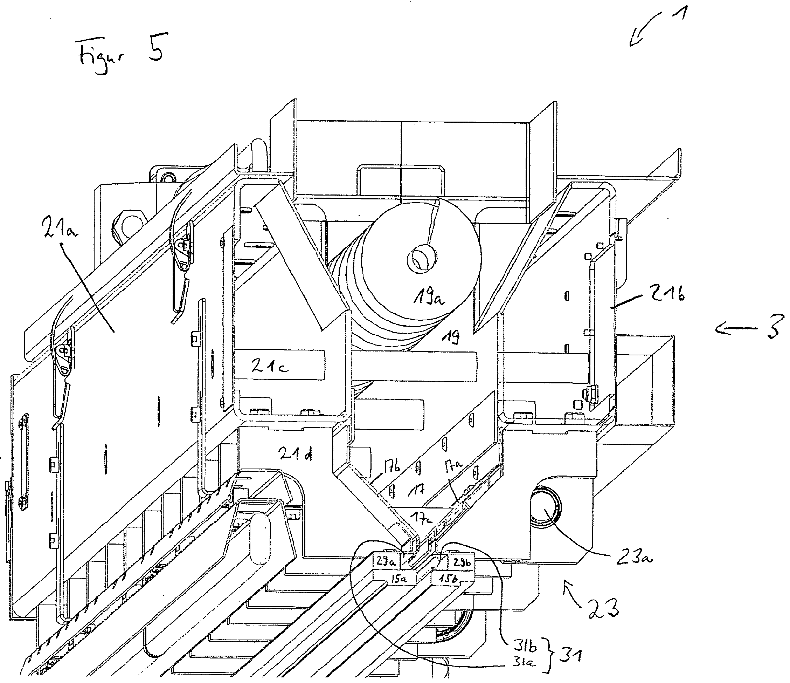

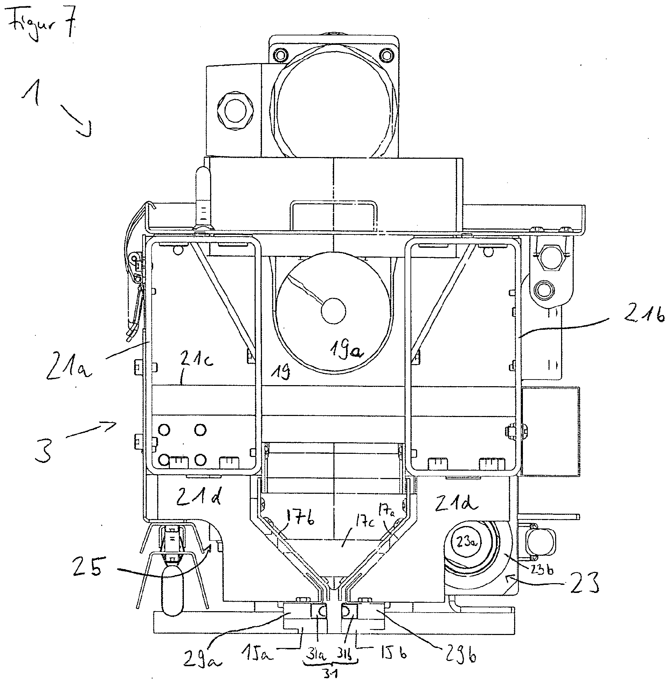

Wie aus den **Figuren 4 bis 7** ersichtlich, kann der Beschichter 3 zum Beispiel einen ersten, unteren Behälter 17, einen (optionalen) zweiten, oberen Behälter 19 und eine Trägerstruktur aufweisen.

Die Trägerstruktur kann zum Beispiel einen oder mehrere quer zur Bewegungsrichtung bzw. in Beschichter-Längsrichtung verlaufende Träger 21 a, 21 b aufweisen, die zum Beispiel entlang der Beschichter-Längsrichtung mit mehreren Rohren oder Stäben 21 c in Querrichtung verbunden sein können. Wie aus Figur 3 ersichtlich, können die Träger 21a, 21b zum Beispiel an zumindest einer ihrer Stirnseiten mit einer Verbindungsplatte 21e verbunden sein.

Der erste und der zweite Behälter 17, 19 können zum Beispiel jeweils eine langgestreckte Form haben.

Der erste Behälter 17 hat hier beispielgebend eine sich im Querschnitt nach unten hin verjüngende Form, zum Beispiel Trichterform. An seinem unteren Ende hat der erste Behälter 17 einen Längsschlitz (ohne Bezugszeichen). An seinem oberen Ende kann der erste Behälter 17 zum Beispiel offen sein und mit einem unteren, offenen Ende des optionalen zweiten Behälters 19 in Verbindung stehen. Zum Beispiel kann der erste Behälter 17 entlang der Längsrichtung mit ein oder mehreren Versteifungselementen 17c versteift sein.

Der erste Behälter 17 ist beispielgebend als Rüttelbehälter ausgeführt, dessen eine Seitenwand 17a (hier die rechte Seitenwand) von einer Rüttelvorrichtung 23 mit einer Rüttelbewegung beaufschlagbar ist, um in dem Behälter 17 aufgenommenes partikelförmiges Baumaterial in Vibration zu versetzen.

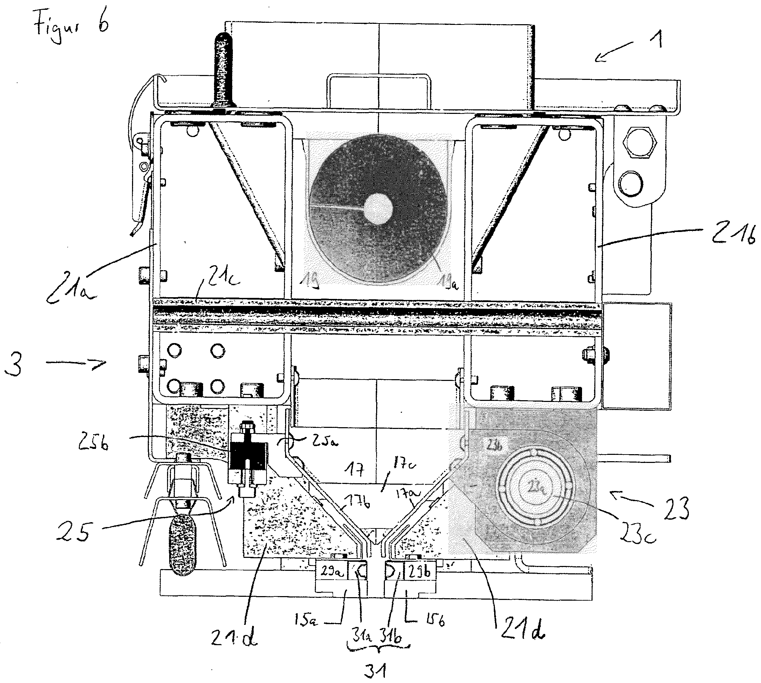

Der erste Behälter 17 ist hier beispielgebend auf einer Seite (hier an der rechten Seitenwand 17a) über die Rüttelvorrichtung 23 mit der Trägerstruktur (21b) verbunden und auf der anderen Seite (hier an der linken Seitenwand 17b) über eine Dämpfungsvorrichtung 25 mit der Trägerstruktur (21a) verbunden. Siehe zum Beispiel Figur 6.

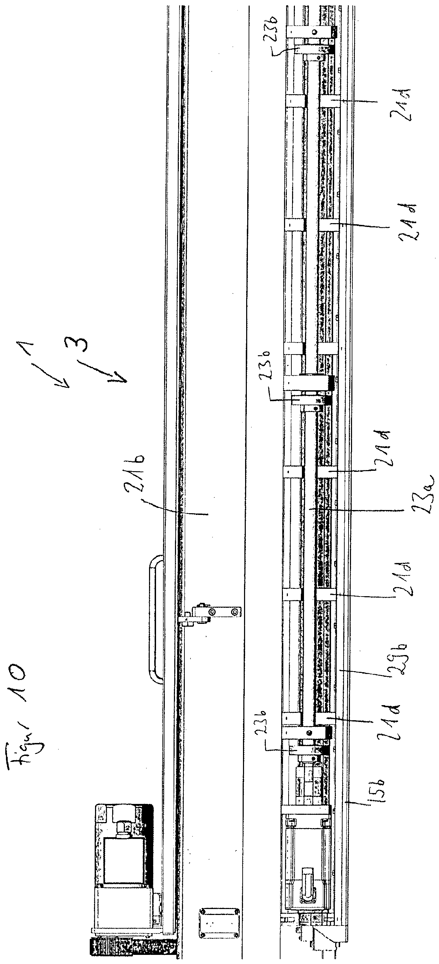

Wie gezeigt, kann die Rüttelvorrichtung 23 zum Beispiel eine Welle 23a aufweisen, die über einen Exzenter 23c mit einem Pleuel 23b verbunden ist, der mit der einen Seite des ersten Behälters 17 verbunden ist. Es können in Beschichter-Längsrichtung zum Beispiel mehrere Pleuel 23b und/oder Exzenter 23c hintereinander vorgesehen sein. Siehe zum Beispiel **Figur 10****.**

Die Dämpfungsvorrichtung 25 kann zum Beispiel ein Dämpfungselement 25b, das an der Trägerstruktur 21 a befestigt ist, sowie einen Vorsprungabschnitt 25a aufweisen, der mit der anderen Seite des ersten Behälters 17 verbunden oder von diesem gebildet ist und sich auf dem Dämpfungselement 25b abstützt. Es können zum Beispiel in Beschichter-Längsrichtung mehrere Dämpfungsvorrichtungen 25 hintereinander vorgesehen sein, d.h. der erste Behälter kann entlang der Beschichter-Längsrichtung an mehreren Stellen mit der Trägerstruktur verbunden sein.

Der (optionale) zweite Behälter 19 kann beispielgebend eine im Querschnitt rechteckige Form haben. Der zweite Behälter dient hier als sogenannter Vorlagebehälter, der den ersten Behälter mit Baumaterial versorgt. In dem zweiten Behälter kann zum Beispiel ein Verteilerelement 19a, hier eine Verteilerschnecke, aufgenommen sein. Der zweite Behälter 19 kann starr mit der Trägerstruktur verbunden sein und/oder von dieser gebildet/begrenzt sein.

In dem gezeigten Ausführungsbeispiel sind der erste Behälter 17 und der zweite Behälter 19 voneinander rüttelbewegungsentkoppelt.

Wie ferner aus den Figuren 4 bis 7 ersichtlich (siehe auch Figur 10), kann die Trägerstruktur zum Beispiel entlang der Beschichter-Längsrichtung auf beiden Seiten des Behälters 17 ein oder mehrere Rippen 21d aufweisen, die im Wesentlichen starr mit den Trägern 21 a bzw. 21 b verbunden sind und an denen die Streichelemente 15a und 15b von dem ersten Behälter 17 rüttelbewegungsentkoppelt befestigt sind, zum Beispiel im Wesentlichen starr, zum Beispiel unter Verwendung einer jeweiligen Leiste 29a bzw. 29b, die zum Beispiel über ein jeweiliges Zwischenteil (ohne Bezugszeichen) an der Rippe befestigt ist.

Oberhalb des ersten Streichelements 15a und unterhalb des Längsschlitzes, also zwischen erstem Streichefement 15a und erstem Behälter 17 kann zum Beispiel ein erstes Schließelement 31 a angeordnet sein. Dieses ist beispielgebend nach unten hin von einer Oberseite des ersten Streichelements 15a umgeben, und wird zudem auf einer lateralen Seite von der Leiste 29a und nach oben hin von dem Zwischenteil (ohne Bezugszeichen) umgeben. In einer Richtung senkrecht zu der Längsrichtung des Beschichters 3 und senkrecht zu einer imaginären, vertikalen Ebene durch den Längsschlitz liegt das erste Schließelement 31 a frei.

Analog kann oberhalb des zweiten Streichelements 15b und unterhalb des Längsschlitzes, also zwischen zweitem Streichelement 15b und erstem Behälter 17 ein zweites Schließelement 31 b angeordnet sein. Dieses ist beispielgebend nach unten hin von einer Oberseite des zweiten Streichelements 15b umgeben, und wird auf einer lateralen Seite von der Leiste 29b und nach oben hin von dem Zwischenteil (ohne Bezugszeichen) umgeben. In einer Richtung senkrecht zu der Längsrichtung des Beschichters 3 und senkrecht zu der imaginären, vertikalen Ebene durch den Längsschlitz liegt das zweite Schließelement 31 b frei.

Das jeweilige Schließelement 31 a, 31 b kann zum Beispiel mit dem zugehörigen Streichelement und/oder der zugehörigen Leiste und/oder dem zugehörigen Zwischenteil fest verbunden sein, zum Beispiel durch Kleben.

Die beiden Schließelemente 31a und 31b, welche zum Beispiel langgestreckt ausgebildet sind, bilden zusammen eine Schließvorrichtung 31 aus, die eingerichtet ist, um die Öffnung des Behälters 17 zum Ausgeben des partikelförmigen Baumaterials selektiv zu verschließen. In den Figuren 4 bis 7 sind die Schließelemente 31 a und 31 b dabei in ihrem jeweiligen geöffneten Zustand gezeigt.

Die Schließelemente 31a und 31b gemäß der gezeigten, beispielgebenden Ausführungsform können die Öffnung in ihrem jeweiligen Schließzustand selektiv teilweise verdecken (zum Beispiel in Folge einer seitlichen Ausdehnung des jeweiligen Schließelements), so dass die Schließelemente 31a und 31b die Öffnung gemeinsam verschließen.

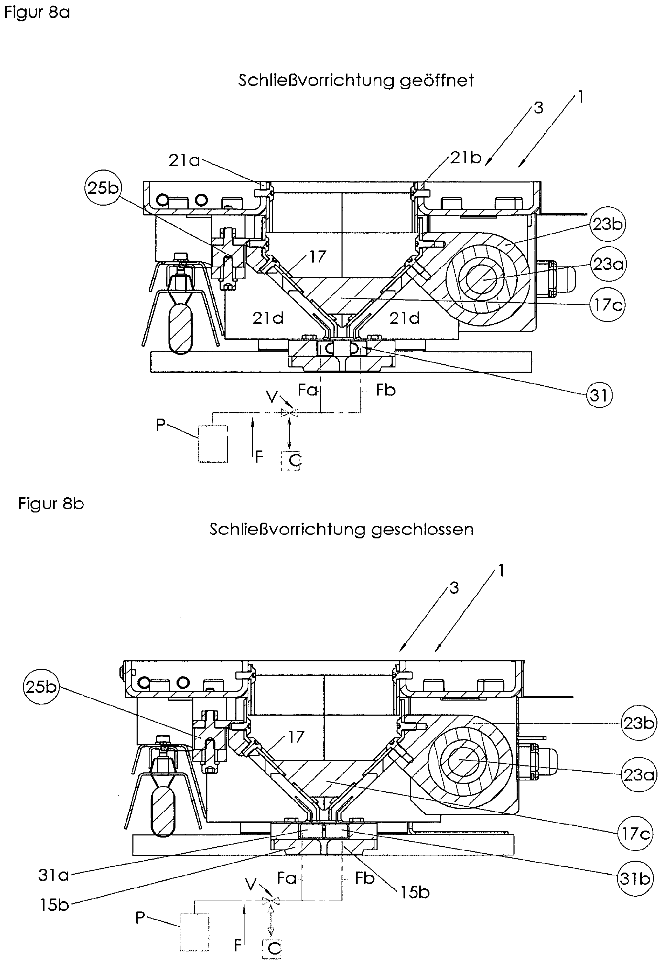

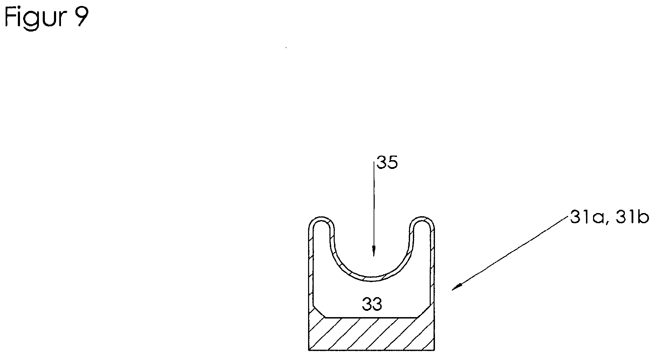

Wie aus den **Figuren 8a**, **8b** **und** **9** ersichtlich, können das erste Schließelement 31a und das zweite Schließelement 31 b zum Beispiel einen ersten bzw. einen zweiten Hohlkörper aufweisen, wobei jeder der beiden Hohlkörper einen inneren Hohlraum 33 hat (siehe Figur 9), der von einem verformbaren Abschnitt 35 begrenzt ist, wobei die beiden Hohlkörper derart auf einander gegenüberliegenden Seiten der Öffnung angeordnet sind (siehe Figur 8a), dass die verformbaren Abschnitte einander zugewandt sind, und wobei jeder der beiden Hohlkörper eingerichtet ist, um von einem zugeführten Druckfluid unter einer Expansion des inneren Hohlraums an dem verformbaren Abschnitt nach außen hin verformt zu werden, so dass die beiden verformbaren Abschnitte aufeinander zu bewegbar und miteinander in Kontakt bringbar sind, um hierdurch die Öffnung zu verschließen (siehe Figur 8b). Wie aus Figur 8b ersichtlich, verdeckt dabei jedes der beiden Schließelemente 31a, 31 b teilweise die Öffnung. Das mindestens eine Schließelement 31 a, 31 b oder zumindest der verformbare Abschnitt davon ist hier beispielgebend aus einem nachgiebigen, elastischen Silikonmaterial gefertigt und weist eine Dichtfläche auf, die eingerichtet ist, um in einem Schließzustand der Schließvorrichtung an einer Gegenfläche abzudichten. Die Dichtfläche ist dabei an dem verformbaren Abschnitt ausgebildet. Gemäß der gezeigten Ausführungsform ist die Gegenfläche ebenfalls von einem verformbaren Abschnitt gebildet.

Wie aus den Figuren 8a, 8b und 9 ersichtlich, kann der verformbare Abschnitt 35 zum Beispiel bei freigegebener Öffnung einwärts gewölbt sein und zum Schließen der Öffnung von einem dem Hohlkörper zugeführten Druckfluid nach außen wölbbar sein.

Wie in den Figuren 8a und 8b angedeutet, kann die Schließvorrichtung 31 zum Beispiel ferner eine Fluidleitungsstruktur F aufweisen (gestrichelte Line), über die das jeweilige Schließelement 31a, 31b mit einer Druckfluidquelle in Fluidverbindung steht.

Die Fluidleitungsstruktur F kann zum Beispiel zumindest abschnittsweise als Schlauchleitungsstruktur ausgebildet sein, zum Beispiel als Schleppschlauchleitungsstruktur. Die Schlauchleitungsstruktur kann eine erste und eine zweite Schlauchleitung Fa bzw. Fb aufweisen, wobei die jeweilige Schlauchleitung zum Beispiel an einer Stirnseite des zugehörigen Schließelements 31a, 31b an dasselbe angeschlossen sein kann.

Die Druckfluidquelle weist hier beispielgebend einen Druckluftbehälter P, der hier beispielgebend als ortsfester Behälter ausgebildet ist, sowie ein Ventil V auf, das zum Beispiel zwischen dem Druckluftbehälter P und den Schließelementen an der Fluidleitung F montiert sein kann.

Wie in den Figuren 8a und 8b ferner angedeutet, kann die Schließvorrichtung 31 zum Beispiel ferner eine Steuereinheit C aufweisen, die eingerichtet ist, um die Öffnung mittels des mindestens einen Schließelements 31 a, 31 b gesteuert selektiv zu schließen.

Dabei steht die Steuereinheit hier beispielgebend mit dem Ventil V in Verbindung und ist eingerichtet, um dieses für ein Schließen der Öffnung derart anzusteuern, dass die Druckfluidquelle Druckfluid in den mindestens einen Hohlkörper 31a einspeist, so dass dieser an seinem verformbaren Abschnitt 35 verformt wird, um hierdurch die Öffnung zu verschließen.

In Figur 8a ist das Ventil dabei geschlossen (und folglich die Schließvorrichtung geöffnet), wohingegen in Figur 8b das Ventil geöffnet ist (und folglich die Schließvorrichtung geschlossen ist).

Die Steuereinheit C kann zum Beispiel eingerichtet sein, um
die Schließvorrichtung 31 zu schließen, wenn der dem Beschichter 3 zugeteilte Baujob beendet und/oder unterbrochen ist, und/oder
während einer beschichtungsfreien Fahrt und/oder während einem beschichtungsfreien Fahrtabschnitt, zum Beispiel Vorlauf- und/oder Nachlauffahrtabschnitt, die Schließvorrichtung 31 des Beschichters 3 zumindest zeitweise zu schließen und/oder
in einer Ruheposition des Beschichters 3 die Schließvorrichtung 31 des Beschichters zu schließen und/oder
die Schließvorrichtung 31 des Beschichters 3 für eine Reinigung des Beschichters zumindest zeitweise zu schließen.

Die verformbaren Abschnitte können zum Beispiel von dem oben beschriebenen, seitlichen, freien Abschnitt des jeweiligen Schließelements gebildet sein.

Ein derart ausgebildetes Schließelement kann gemäß verschiedenen Ausführungsformen zum Beispiel auch als aufblasbares Dichtelement bezeichnet werden.

Es versteht sich, dass in einer beispielgebenden Abwandlung der gezeigten Ausführungsform anstelle der zwei Schließelemente 31 a und 31 b zum Beispiel nur ein Schließelement 31a vorgesehen sein kann, das in dem geschlossenen Zustand der Schließvorrichtung die Öffnung vollständig verdeckt. Ferner alternativ könnte die Schließvorrichtung zum Beispiel ein oder mehrere Schieber aufweisen.

Es sei noch angemerkt, dass die in Figur 1 gezeigte Beschichteranordnung für jeden der Beschichter 3 und 5 eine separate Schließvorrichtung aufweisen kann, so dass die Öffnung eines jeweiligen Beschichters unabhängig und selektiv verschließbar ist.

Ferner kann in dem Fall, dass der Beschichter 3 zusammen mit dem Beschichter 5 vorgesehen ist, derjenige Beschichter, dessen Baujob zuerst beendet ist, mittels seiner zugehörigen Schließvorrichtung geschlossen werden, zum Beispiel mindestens solange bis der Baujob des anderen Beschichters erledigt ist.

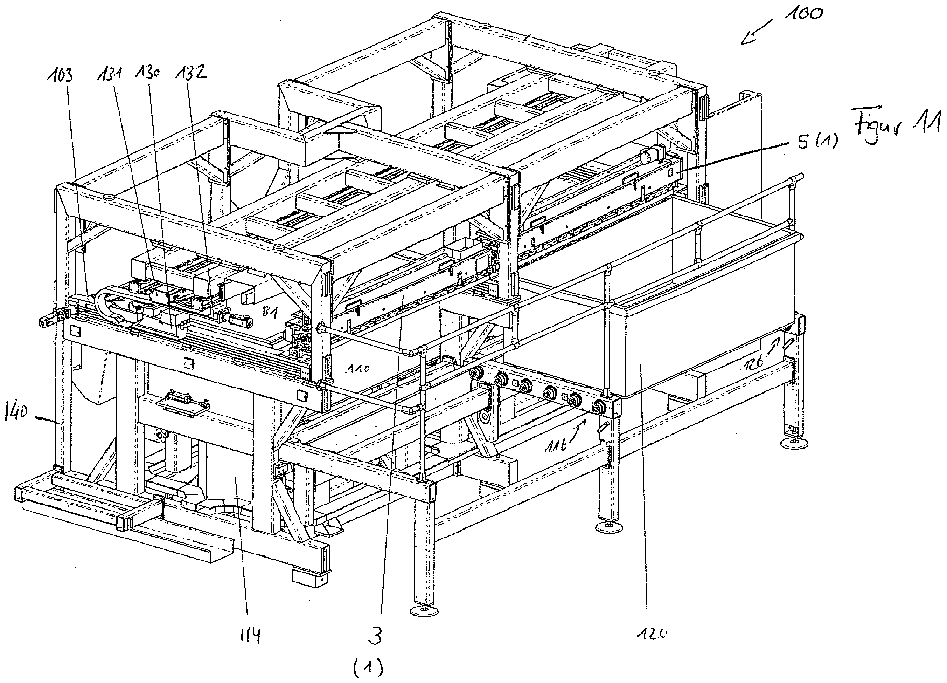

**Figur 11** zeigt einen 3D-Drucker 100 gemäß einer Ausführungsform der Erfindung, wobei das Anlagengehäuse weggelassen ist, so dass der Anlagenrahmen 140 zu erkennen ist.

Wie in Figur 11 gezeigt, kann die oben beschriebene Beschichteranordnung 1 zum Beispiel in einem 3D-Drucker 100 eingesetzt werden. Das Bezugszeichen 103 zeigt in diesem Zusammenhang eine Linearführungssfruktur für den mindestens einen Beschichter 3.

Der 3D-Drucker 100 kann zum Beispiel neben der Beschichteranordnung 1 (hier beispielgebend aufweisend einen ersten und einen zweiten Beschichter 3, 5) eine Druckvorrichtung mit einem Druckkopf 130 aufweisen, der eingerichtet ist, um einen vorbestimmten Teilbereich einer zuvor aufgebrachten Schicht aus Baumaterial mit Behandlungsmittel zu bedrucken.

Der Druckkopf 130 kann zum Beispiel horizontal verfahrbar sein, zum Beispiel in einer Richtung senkrecht zu der Richtung, in der der mindestens eine Beschichter 3, 5 verfahrbar ist, zum Beispiel entlang einer ersten Druckkopf-Linearführungsführungsstruktur 131.

Der Druckkopf 130 kann dabei zum Beispiel eingerichtet sein, um mehrere Baufelder (hier zwei) zu bedienen.

Der Druckkopf 130 kann zum Beispiel zusätzlich in der Richtung verfahrbar sein, in der auch der mindestens eine Beschichter 3, 5 verfahrbar ist, so dass er das oder die Baufelder insgesamt mäanderförmig abfahren kann, zum Beispiel in einer U-Form. Hierzu kann der Druckkopf 130 zum Beispiel entlang einer zweiten Druckkopf-Linearführungsstruktur 132 verfahrbar sein.

Alternativ zu der Druckvorrichtung kann eine jeweilige Baumaterialschicht zum Beispiel mit einem Laser selektiv verfestigt, zum Beispiel gesintert, werden (sogenanntes "selektives Lasersintern").

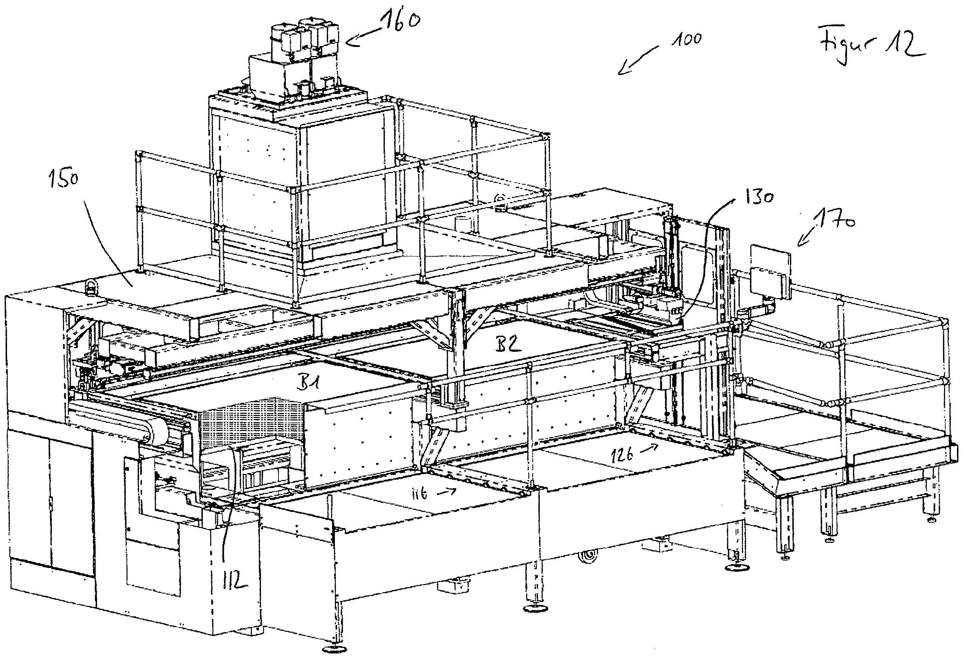

Wie in Figur 11 gezeigt (siehe auch Figur 12), kann der 3D-Drucker 100 zum Beispiel ein oder mehrere Baubereiche B1 und B2 aufweisen (hier beispielgebend zwei), die zum Beispiel von einer jeweiligen Bauplattform 112 (siehe Figur 12) und/oder einer jeweiligen Baubox 110 bzw. 120 definiert werden, wenn diese sich in ihrer Bauposition innerhalb des 3D-Druckers befindet.

Die jeweilige Bauplattform 112 kann zum Beispiel mit einem zugehörigen Hubantrieb (hier beispielgebend mit einem anlagenfesten Hubantrieb 114) höhenverstellbar sein.

Die erste Baubox 110 kann wie gezeigt zum Beispiel über eine erste Rollenbahn 116 in den 3D-Drucker hinein und aus diesem heraus verfahrbar sein, und die zweite Baubox 120 kann zum Beispiel über eine zweite Rollenbahn 126 in den 3D-Drucker hinein und aus diesem heraus verfahrbar sein.

**Figur 12** zeigt den 3D-Drucker 100 aus Figur 11, diesmal mit einem Großteil des Anlagengehäuses 150 sowie mit einer integrierten Beschichter-Beschickungseinheit 160.

Wie in Figur 12 gezeigt, kann der 3D-Drucker 100 zum Beispiel ferner eine in den 3D-Drucker integrierte Beschichter-Beschickungseinheit 160 aufweisen, mit der Baumaterial frisch zubereitbar und in den (jeweiligen) Beschichter zuführbar ist.

Zu erkennen sind zwei Vorratsbehälter, die ein jeweiliges Partikelmaterial speichern und dieses in einen nicht sichtbaren Mischbehälter mit Rührwerk dosiert einspeisen können.

Ein Teil des Anlagengehäuses 150 und der ersten Baubox 100 ist in Figur 12 freigeschnitten, um die Bauplattfiorm 112 und den auf dieser angeordneten Stapel aus Baumaterialschichten sichtbar zu machen.

Die Beschichter 3, 5 sind in Figur 12 nach hinten verfahren, und der Druckkopf 130 befindet sich rechts vorne.

In Figur 12 ist zudem gut zu erkennen, wie von der ersten Baubox und der zweiten Baubox in dem 3D-Drucker ein erster Baubereich B1 bzw. ein zweiter Baubereich B2 gebildet werden.

Das Bezugszeichen 170 bezeichnet eine gemeinsame Bedienstation.

Die Bezugszeichen 116 und 126 bezeichnen eine jeweilige Zuführvorrichtung, hier beispielgebend in der Form einer Rollenbahn, mit der eine jeweilige Baubox in ihre Baubox-Bauposition innerhalb des 3D-Druckers verfahrbar ist.

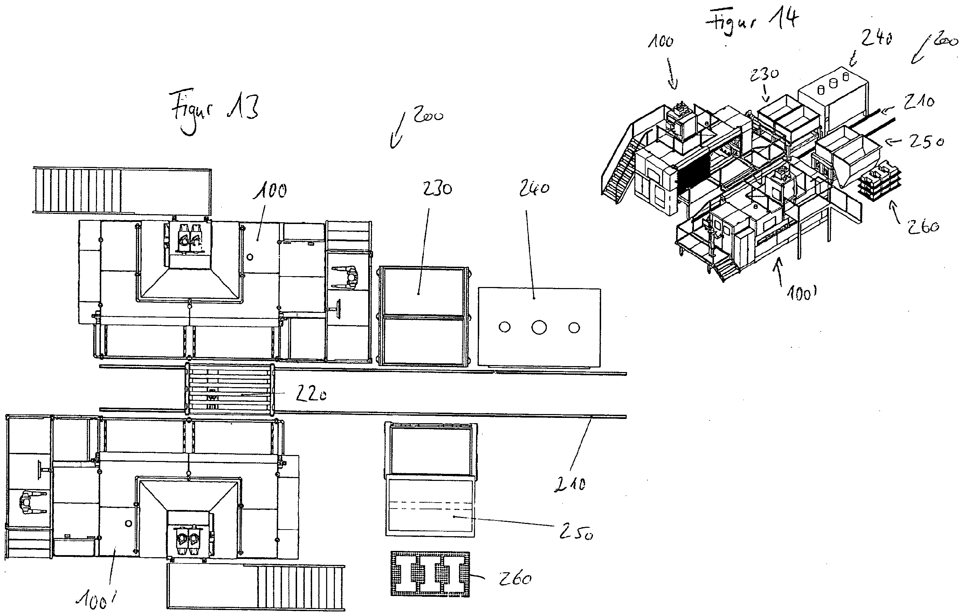

Die **Figuren 13 und 14** zeigen in einer Draufsicht bzw. Perspektivansicht von oben eine 3D-Druckeranordnung 200, welche einen ersten und einen zweiten 3D-Drucker 100 bzw. 100' aufweist,

Die beiden 3D-Drucker können zum Beispiel wie der mit Bezug auf die Figuren 11 und 12 beschriebene 3D-Drucker 100 ausgebildet sein.

Wie in den Figuren 13 und 14 gezeigt, können der erste und der zweite 3D-Drucker 100, 100' benachbart zueinander angeordnet sein, derart, dass sich die Einführöffnungen zum Einführen der Bauboxen gegenüber liegen. Zwischen den beiden 3D-Druckern kann sich zum Beispiel ein Schienensystem 210 erstrecken, entlang welchem eine gemeinsame Transportvorrichtung 220 verfahrbar ist. Die Transportvorrichtung 220 kann von sowohl dem ersten als auch dem zweiten 3D-Drucker 100, 100' genutzt werden, um den jeweiligen 3D-Drucker mit ein oder mehreren Bauboxen zu bestücken.

Ferner können entlang des Schienensystems ein oder mehrere optionale Komponenten angeordnet sein, zum Beispiel ein Baubox-Vorrat 230, in dem ein oder mehrere Bauboxen vorgehalten werden, und/oder ein Mikrowellen-Ofen 240, der eine Baubox aufnehmen kann, um ein darin enthaltenes Bauteil (weiter) auszuhärten, und/oder eine Entpackstation 250, wo ein in der Baubox enthaltenes Bauteil von losem, nicht verfestigtem Partikelmaterial befreit und somit "ausgepackt" werden kann, zum Beispiel automatisiert. Das Bezugszeichen 260 bezeichnet dabei einen optionalen Bauteil-Vorrat, in den ausgepackte Bauteile (hier beispielgebend Gussformen und/oder Gießkerne), die mittels eines generativen Herstellungsverfahrens unter Verwendung eines der beiden 3D-Drucker hergestellt wurden, eingelagert werden können.

## Patentansprüche

1. Beschichteranordnung (1) für einen 3D-Drucker (100), aufweisend:
einen Beschichter (3) mit einer Trägerstruktur (21a-21c) und einem an der Trägerstruktur befestigten Behälter (17), der einen inneren Hohlraum zur Aufnahme von partikelförmigem Baumaterial definiert, der in einer Öffnung zum Ausgeben des partikelförmigen Baumaterials mündet,
eine Vibrationsvorrichtung (23), die eingerichtet ist, um in dem Behälter aufgenommenes, partikelförmiges Baumaterial in Vibration zu versetzen und dadurch die Ausgabe von Baumaterial aus der Öffnung zu beeinflussen, und
ein an dem Beschichter angebrachtes Streichelement (15a), das eingerichtet ist, um aus der Öffnung ausgegebenes partikelförmiges Baumaterial zu überstreichen, um dadurch das ausgegebene Partikelmaterial zu nivellieren und/oder zu verdichten, und/oder
eine Schließvorrichtung (31), die eingerichtet ist, um die Öffnung selektiv zu verschließen, und ein an dem Beschichter (3) angebrachtes Schließelement (31a) aufweist,
**dadurch gekennzeichnet, dass**
das Streichelement (15a) und/oder das Schließelement (31a) von der mittels der Vibrationsvorrichtung in dem Behälter (17) erzeugten Vibration vibrationsentkoppelt an der Trägerstruktur befestigt sind.

2. Beschichteranordnung (1) für einen 3D-Drucker (100), aufweisend:
einen Beschichter (3) mit einer Trägerstruktur (21a-21c) und einem an der Trägerstruktur befestigten Behälter (17), der einen inneren Hohlraum zur Aufnahme von partikelförmigem Baumaterial definiert, der in einer Öffnung zum Ausgeben des partikelförmigen Baumaterials mündet,
eine Rüttelvorrichtung (23), die eingerichtet ist, um einen Wandabschnitt (17a) des Behälters mit einer Rüttelbewegung zu beaufschlagen und dadurch die Ausgabe von Baumaterial aus der Öffnung zu beeinflussen, und
ein an dem Beschichter angebrachtes Streichelement (15a), das eingerichtet ist, um aus der Öffnung ausgegebenes partikelförmiges Baumaterial zu überstreichen, um dadurch das ausgegebene Partikelmaterial zu nivellieren und/oder zu verdichten, und/oder
eine Schließvorrichtung (31), die eingerichtet ist, um die Öffnung selektiv zu verschließen, und ein an dem Beschichter (3) angebrachtes Schließelement (31 a) aufweist,
**dadurch gekennzeichnet, dass**
das Streichelement (15a) und/oder das Schließelement (31 a) von der mittels der Rüttelvorrichtung an dem Wandabschnitt (17a) des Behälters erzeugten Rüttelbewegung rüttelbewegungsentkoppelt an der Trägerstruktur befestigt ist.

3. Beschichteranordnung (1) nach Anspruch 1 oder 2, aufweisend ein erstes und ein zweites Streichelement (15a, 15b), die jeweils von dem Wandabschnitt (17a) des Behälters rüttelbewegungsentkoppelt und/oder von der mittels der Vibrationsvorrichtung in dem Behälter (17) erzeugten Vibration vibrationsentkoppelt an der Trägerstruktur befestigt sind.

4. Beschichteranordnung (1) nach einem der Ansprüche 1 bis 3, aufweisend ein erstes und ein zweites Schließelement (31 a, 31 b), die jeweils von dem Wandabschnitt (17a) des Behälters rüttelbewegungsentkoppelt und/oder von der mittels der Vibrationsvorrichtung in dem Behälter (17) erzeugten Vibration vibrationsentkoppelt an der Trägerstruktur befestigt sind.

5. Beschichteranordnung (1) nach einem der Ansprüche 1 bis 4,
wobei das jeweilige Streichelement (15a, 15b) und/oder das jeweilige Schließelement (31 a, 31 b) im Wesentlichen starr an der Trägerstruktur (21a-21c) befestigt sind oder
wobei das jeweilige Streichelement (15a, 15b) und/oder das jeweilige Schließelement (31 a, 31 b) von dem Wandabschnitt (17a) des Behälters getrennt an der Trägerstruktur (21 a-21 c) befestigt sind oder
wobei das jeweilige Streichelement (15a, 15b) und/oder das jeweilige Schließelement (31a, 31 b) von dem Behälter (17) getrennt an der Trägerstruktur (21a-21c) befestigt sind oder
wobei das jeweilige Streichelement (15a, 15b) und/oder das jeweilige Schließelement (31 a, 31 b) mit vertikalem Abstand zu der Öffnung unterhalb derselben angeordnet sind oder
wobei das jeweilige Streichelement (15a, 15b) und das jeweilige Schließelement (31a, 31b) gemeinsam an der Trägerstruktur (21a-21c) befestigt sind.

6. Beschichteranordnung (1) nach einem der Ansprüche 2 bis 5, wobei der Wandabschnitt (17a) des Behälters (3) über die Rüttelvorrichtung (23) an der Trägerstruktur (21b) befestigt ist.

7. Beschichteranordnung (1) nach einem der Ansprüche 2 bis 6, wobei die Rüttelvorrichtung (23) von einer Exzentervorrichtung gebildet ist.

8. Beschichteranordnung (1) nach Anspruch 7, wobei die Exzentervorrichtung aufweist:
eine Welle (23a), welche drehbar an der Trägerstruktur (21 a) befestigt ist,
einen an der Welle (23a) angebrachten Exzenter (23c) und
einen Pleuel (23b), der mit dem Wandabschnitt (17) des Behälters (3) verbunden ist.

9. Beschichteranordnung (1) nach einem der vorangehenden Ansprüche, wobei ein Wandabschnitt (17b) des Behälters (17) mittels einer Dämpfungsvorrichtung (25) an der Trägerstruktur (21a) befestigt ist.

10. Beschichteranordnung (1) nach Anspruch 9, wobei die Dämpfungsvorrichtung (25) ein zwischen Trägerstruktur (21a) und dem Wandabschnitt (17b) angeordnetes Dämpfungs-Teil (25b) aufweist.

11. Beschichteranordnung (1) nach einem der vorangehenden Ansprüche, ferner aufweisend;
einen Vorlagebehälter (19), der oberhalb von dem Behälter (17) angeordnet ist, um diesen mit Baumaterial zu versorgen, und der von der mittels der Vibrationsvorrichtung in dem Behälter (17) erzeugten Vibration vibrationsentkoppelt oder von der mittels der Rüttelvorrichtung an dem Wandabschnitt (17a) des Behälters erzeugten Rüttelbewegung rüttelbewegungsentkoppelt ist.

12. Beschichteranordnung (1) nach einem der vorangehenden Ansprüche, ferner aufweisend:
eine Steuereinheit, die eingerichtet ist, um die Vibrationsvorrichtung und/oder die Rüttelvorrichtung (23) anzusteuern, so dass diese das Baumaterial selektiv in Vibration versetzt bzw. einen Wandabschnitt (17a) des Behälters (17) selektiv mit einer Rüttelbewegung beaufschlagt.

13. Beschichteranordnung (1) nach einem der vorangehenden Ansprüche, ferner aufweisend:
eine Führungsstruktur (103), entlang welcher der Beschichter (3) verfahrbar ist.

14. 3D-Drucker (100), aufweisend eine Beschichteranordnung (1) nach einem der vorangehenden Ansprüche.

## Claims

1. Coating device arrangement (1) for a 3D printer (100), comprising:
a coating device (3) having a carrier structure (21 a to 21 c) and a container (17) fixed to the carrier structure, which defines an inner cavity for receiving particulate construction material, which leads to an opening for outputting the particulate construction material,
a vibration device (23) configured to vibrate particulate construction material received in the container and thereby to influence the discharge of construction material from the opening, and
a stroking member (15a) attached to the coating device, configured to stroke particulate construction material output from the opening, to thereby level and/or compress the output particulate material, and/or
a closing device (31) configured to selectively close the opening and comprising a closing member (31 a) attached to the coating device (3),
**characterized in that**
the stroking member (15a) and/or the closing member (31 a) is/are fixed to the carrier structure in a way to be vibration-decoupled from the vibration generated by the vibration device in the container (17).

2. Coating device arrangement (1) for a 3D printer (100), comprising:
a coating device (3) having a carrier structure (21 a to 21 c) and a container (17) fixed to the carrier structure, which defines an inner cavity for receiving particulate construction material, which leads to an opening for outputting the particulate construction material,
a shaking device (23) configured to expose a wall portion (17a) of the container to a shaking motion and to thereby influence the discharge of construction material from the opening, and
a stroking member (15a) attached to the coating device, configured to stroke particulate construction material output from the opening to thereby level and/or compress the output particulate material, and/or
a closing device (31) configured to selectively close the opening and comprising a closing member (31 a) attached to the coating device (3),
**characterized in that**
the stroking member (15a) and/or the closing member (31 a) is/are fixed to the carrier structure to be shaking motion-decoupled from the shaking motion generated by means of the shaking device on the wall portion (17a) of the container.

3. Coating device arrangement (1) according to claim 1 or 2, comprising a first and a second stroking member (15a, 15b) which are fixed to the carrier structure to be respectively shaking motion-decoupled from the wall portion (17a) of the container and/or vibration-decoupled from the vibration generated by means of the vibration device in the container (17).

4. Coating device arrangement (1) according to any one of claims 1 to 3, comprising a first and a second closing member (31 a, 31 b) which are fixed to the carrier structure to be respectively shaking motion-decoupled from the wall portion (17a) of the container and/or vibration-decoupled from the vibration generated by means of the vibration device in the container (17).

5. Coating device arrangement (1) according to any one of claims 1 to 4,
wherein the respective stroking member (15a, 15b) and/or the respective closing member (31 a, 31 b) are fixed to the carrier structure (21 a to 21 c) in a substantially rigid way, or
wherein the respective stroking member (15a, 15b) and/or the respective closing member (31 a, 31 b) are fixed to the carrier structure (21 a to 21 c) separately from the wall portion (17a) of the container, or
wherein the respective stroking member (15a, 15b) and/or the respective closing member (31 a, 31 b) are fixed to the carrier structure (21 a to 21 c) separately from the container (17), or
wherein the respective stroking member (15a, 15b) and/or the respective closing member (31 a, 31 b) are arranged at a vertical distance to the opening underneath the same, or
wherein the respective stroking member (15a, 15b) and the respective closing member (31 a, 31 b) are fixed to the carrier structure (21 a to 21 c) together.

6. Coating device arrangement (1) according to any one of claims 2 to 5, wherein the wall portion (17a) of the container (3) is attached to the carrier structure (21 b) through the shaking device (23).

7. Coating device arrangement (1) according to any one of claims 2 to 6, wherein the shaking device (23) is formed by an eccentric device.

8. Coating device arrangement (1) according to claim 7, the eccentric device comprising:
a shaft (23a) rotatably fixed to the carrier structure (21 a),
an eccentric (23c) attached to the shaft (23a), and
a connecting rod (23b) connected to the wall portion (17) of the container (3).

9. Coating device arrangement (1) according to any one of the preceding claims, wherein a wall portion (17b) of the container (17) is fixed to the carrier structure (21 a) by means of a damping device (25).

10. Coating device arrangement (1) according to claim 9, wherein the damping device (25) comprises a damping part (25b) arranged between the carrier structure (21 a) and the wall portion (17b).

11. Coating device arrangement (1) according to any one of the preceding claims, further comprising:
a charging container (19) arranged above the container (17) to supply the container with construction material, and which is vibration-decoupled from the vibration generated by means of the vibration device in the container (17) or shaking motion-decoupled from the shaking motion generated by means of the shaking device on the wall portion (17a) of the container.

12. Coating device arrangement (1) according to any one of the preceding claims, further comprising:
a control unit configured to control the vibration device and/or shaking device (23) in such a way to selectively vibrate the construction material and to selectively expose a wall portion (17a) of the container (17) to a shaking motion, respectively.

13. Coating device arrangement (1) according to any one of the preceding claims, further comprising:
a guiding structure (103) along which the coating device (3) is displaceable.

14. 3D printer (100), comprising a coating device arrangement (1) according to any one of the preceding claims.

## Revendications

1. Dispositif de revêtement (1) pour une imprimante 3D (100) comprenant :
une coucheuse (3) avec une structure porteuse (21a-21c) et un récipient (17) fixé à la structure porteuse, qui définit un espace creux interne pour le logement d'un matériau de construction particulaire, qui débouche dans une ouverture pour la distribution du matériau de construction particulaire,
un dispositif à vibration (23) qui est configuré pour mettre le matériau de construction particulaire logé dans le récipient en vibration at pour ainsi influencer la distribution de matériau de construction par l'ouverture, et
un élément de badigeonnage (15a) monté sur la coucheuse, qui est conçu pour badigeonner le matériau de construction particulaire distribué par l'ouverture, afin de niveler et/ou de comprimer ainsi le matériau particulaire distribué, et/ou
un dispositif de fermeture (31) qui est conçu pour fermer sélectivement l'ouverture et qui comprend un élément de fermeture (31 a) monté sur la coucheuse (3),
**caractérisé en ce que**
l'élément de badigeonnage (15a) et/ou l'élément de fermeture (31 a) est/sont fixé(s) à la structure porteuse de manière à être découplé(s) vibratoirement de la vibration générée par le dispositif à vibration dans le récipient (17).

2. Dispositif de revêtement (1) pour une imprimante 3D (100) comprenant :
une coucheuse (3) avec une structure porteuse (21 a-21 c) et un récipient (17) fixé à la structure porteuse, qui définit un espace creux interne pour le logement d'un matériau de construction particulaire, qui débouche dans une ouverture pour la distribution du matériau de construction particulaire,
un dispositif de secouement (23) qui est conçu pour exposer une partie de paroi (17a) du récipient à un mouvement de secouement et pour ainsi influencer la distribution de matériau de construction par l'ouverture, et
un élément de badigeonnage (15a) monté sur la coucheuse, qui est conçu pour badigeonner le matériau de construction particulaire distribué par l'ouverture, afin de niveler et/ou de comprimer ainsi le matériau particulaire distribué, et/ou
un dispositif de fermeture (31) qui est conçu pour fermer sélectivement l'ouverture et qui comprend un élément de fermeture (31 a) monté sur la coucheuse (3),
**caractérisé en ce que**
l'élément de badigeonnage (15a) et/ou l'élément de fermeture (31 a) est/sont fixé/s à la structure porteuse de manière à être découplé(s) du mouvement de secouement généré sur la partie de paroi (17a) du récipient.

3. Dispositif de revêtement (1) selon la revendication 1 ou 2, comprenant un premier et un deuxième élément de badigeonnage (15a, 15b) qui sont respectivement fixés à la structure porteuse de manière à être découplés du mouvement de secouement de la partie de paroi (17a) du récipient et/ou de manière à être découplés vibratoirement de la vibration générée par le dispositif à vibration dans le récipient (17).

4. Dispositif de revêtement (1) selon l'une quelconque des revendications 1 à 3, comprenant un premier et un deuxième élément de fermeture (31 a, 31 b) qui sont respectivement fixés à la structure porteuse de manière à être découplés du mouvement de secouement de la partie de paroi (17a) du récipient et/ou de manière à être découplés vibratoirement de la vibration générée par le dispositif à vibration dans le récipient (17).

5. Dispositif de revêtement (1) selon l'une quelconque des revendications 1 à 4,
dans lequel l'élément de badigeonnage (15a, 15b) respectif et/ou l'élément de fermeture (31 a, 31 b) respectif sont fixés à la structure porteuse (21 a-21 c) essentiellement de manière rigide, ou
dans lequel l'élément de badigeonnage (15a, 15b) respectif et/ou l'élément de fermeture (31 a, 31 b) respectif sont fixés à la structure porteuse (21 a-21 c) de manière à être séparés de la partie de paroi (17a) du récipient, ou
dans lequel l'élément de badigeonnage (15a, 15b) respectif et/ou l'élément de fermeture (31 a, 31 b) respectif sont fixés à la structure porteuse (21 a-21 c) de manière à être séparés du récipient (17), ou
dans lequel l'élément de badigeonnage (15a, 15b) respectif et/ou l'élément de fermeture (31 a, 31 b) respectif sont disposés à une distance verticale de l'ouverture en dessous de celle-ci, ou
dans lequel l'élément de badigeonnage (15a, 15b) respectif et l'élément de fermeture respectif (31 a, 31 b) sont fixés à la structure porteuse (21 a-21 c) ensemble.

6. Dispositif de revêtement (1) selon l'une quelconque des revendications 2 à 5, dans lequel la partie de paroi (17a) du récipient (3) est fixée à la structure porteuse (21 b) par le dispositif de secouement (23).

7. Dispositif de revêtement (1) selon l'une quelconque des revendications 2 à 6, dans lequel le dispositif de secouement (23) est formé par un dispositif excentrique.

8. Dispositif de revêtement (1) selon la revendication 7, dans lequel le dispositif excentrique comprend :
un arbre (23a) fixé de façon rotative à la structure porteuse (21 a),
un excentrique (23c) monté sur l'arbre (23a), et
une bielle (23b) reliée avec la partie de paroi (17) du récipient (3).

9. Dispositif de revêtement (1) selon l'une quelconque des revendications précédentes, dans lequel une partie de paroi (17b) du récipient (17) est fixée à la structure porteuse (21 a) moyennant un dispositif amortisseur (25).

10. Dispositif de revêtement (1) selon la revendication 9, dans lequel le dispositif amortisseur (25) comprend une partie d'amortissement (25b) disposée entre la structure porteuse (21a) et la partie de paroi (17b).

11. Dispositif de revêtement (1) selon l'une quelconque des revendications précédentes, comprenant en outre :
un récipient collecteur (19) qui est disposé au-dessus du récipient (17), afin d'alimenter celui-ci en matériau de construction, et qui est découplé vibratoirement de la vibration générée par le dispositif à vibration dans le récipient (17) et découplé du mouvement de secouement généré par le dispositif de secouement sur la partie de paroi (17a) du récipient.

12. Dispositif de revêtement (1) selon l'une quelconque des revendications précédentes, comprenant en outre :
une unité de commande, qui est conçue pour commander le dispositif à vibration et/ou le dispositif de secouement (23), de façon à ce que celui-ci mette le matériau de construction sélectivement en vibration ou bien expose une partie de paroi (17a) du récipient (17) sélectivement à un mouvement de secouement.

13. Dispositif de revêtement (1) selon l'une quelconque des revendications précédentes, comprenant en outre :
une structure de guidage (103), le long de laquelle la coucheuse est mobile.

14. Imprimante 3D (100), comprenant un dispositif de revêtement (1) selon l'une quelconque des revendications précédentes.
